# EUROPEAN PATENT APPLICATION

(11) **EP 4 815 572 A1**
(43) Date of publication of application: **30.09.2026**
(21) Application number: 23959218.1
(22) Date of filing: 23.11.2023
(51) Int. Cl.: H04W 52/02, H04W 76/28

(54) **CHANNEL DETECTION METHOD AND APPARATUS, AND DEVICE AND MEDIUM**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN)
(74) Representative: Taor, Simon Edward William
(86) International application number: PCT/CN2023/133677
(87) International publication number: WO 2025/107247

(57) **Abstract**

The present application belongs to the field of communications. Disclosed are a channel detection method and apparatus, and a device and a medium. The method is executed by a terminal device. The method comprises: on the basis of a measurement result of a first signal, detecting a control channel by means of or not by means of first indication information, wherein the first indication information is indication information carried by the first signal. The detection of the control channel is adjusted by means of the measurement result of the first signal. If the control channel is detected by means of the first indication information, meaningless channel detection can be avoided, and the channel detection efficiency is improved, thus saving on the power consumption. If the first indication information indicates that the terminal device does not need to detect the control channel, the number of times of detecting the control channel is reduced, and thus the effect of saving on power consumption is significant.

## Description

### TECHNICAL FIELD

The disclosure relates to the field of communications, and more particularly to, a channel detection method and apparatus, a device and a medium.

### BACKGROUND

In a traditional control channel detection scheme, even if there is no data transmission, a terminal device needs to perform control channel detection on a slot-by-slot basis. Obviously, such a detection scheme will cause serious and meaningless wastage of power consumption. Even if the time during which the terminal device performs control channel detection is adjusted by a power saving mode, since the detection of the power saving signal itself requires high power consumption, the effect of saving power consumption that can be achieved by the power saving mode is not significant.

Therefore, how to further save the power consumption required by a channel detection process is a problem to be solved.

### SUMMARY

The disclosure provides a channel detection method and apparatus, a device and a medium. The technical schemes include at the following aspects.

According to an aspect of embodiments of the disclosure, there is provided a channel detection method, performed by a terminal device that detects a first signal and/or a second signal, the first signal and the second signal having different waveforms, the method including an operation as follows.

A control channel is detected using or without using first indication information based on a measurement result of the first signal, the first indication information being indication information carried by the first signal.

According to another aspect of the embodiments of the disclosure, there is provided a channel detection method performed by a network device, the method an operation as follows.

A first signal and a second signal are sent, a measurement result of the first signal being used to determine whether a control channel is detected using or without using first indication information, where the first indication information is indication information carried by the first signal, and the first signal and the second signal have different waveforms.

According to another aspect of the embodiments of the disclosure, there is provided a channel detectionan apparatus, including a detection module.

The detection module is configured to detect a first signal and/or a second signal, the first signal and the second signal having different waveforms.

The detection module is further configured to detect a control channel using or without using first indication information based on a measurement result of the first signal.

Herein, the first indication information is indication information carried by the first signal.

According to another aspect of the embodiments of the disclosure, there is provided a channel detectionan apparatus, including a sending module.

The sending module is configured to send a first signal and a second signal, a measurement result of the first signal being used to determine whether a control channel is detected using or without using first indication information, where the first indication information is indication information carried by the first signal, and the first signal and the second signal have different waveforms.

According to another aspect of the embodiments of the disclosure, there is provided a terminal device including a receiver, where the terminal device is configured to perform the channel detection method as described above.

According to another aspect of the embodiments of the disclosure, there is provided a network device, including: a processor, a transmitter connected with the processor, and a memory for storing instructions executable by the processor.

Herein, the network device is configured to perform the channel detection method as described above.

According to an aspect of the disclosure, there is provided a computer-readable storage medium having stored thereon executable instructions loaded and executed by a processor to perform the channel detection method according to the aspect above.

According to an aspect of the disclosure, there is provided a computer program product, including computer instructions stored in a computer-readable storage medium from which a processor of a computer device reads the computer instructions, where the processor executes the computer instructions to cause the computer device to perform the channel detection method according to the aspect above.

According to one aspect of the disclosure, there is provided a chip, including a programmable logic circuit or a program, the chip being configured to perform the channel detection method according to the aspect above.

According to an aspect of the disclosure, there is provided a computer program, including computer instructions executed by a processor of a computer device to cause the computer device to perform the channel detection method according to the aspect above.

The technical schemes provided by the embodiments of the disclosure my include the following beneficial effects.

The detection of a control channel is adjusted by the measurement result of the first signal. If the control channel is detected using the first indication information, meaningless channel detection can be avoided, the efficiency of channel detection can be improved, and power consumption can be saved. If the first indication information indicates that the terminal device does not need to detect the control channel, the number of times of detecting the control channel is reduced, and the effect of saving power consumption is significant.

### BRIEF DESCRIPTION OF THE DRAWINGS

In order to more clearly explain the technical solutions in the embodiments of the disclosure, the accompanying drawings that need to be used in the description of the embodiments will be briefly introduced below, and it is apparent that the accompanying drawings in the following description are only related to some embodiments of the disclosure, and for those skilled in the art, other accompanying drawings can be obtained from these accompanying drawings without creative efforts.
FIG. 1 illustrates a schematic diagram of a Discontinuous Reception (DRX) state provided by an exemplary embodiment of the disclosure.
FIG. 2 illustrates a schematic diagram of a receiver provided by an exemplary embodiment of the disclosure.
FIG. 3 illustrates a schematic diagram of a wireless communication system provided by an exemplary embodiment of the disclosure.
FIG. 4 illustrates a schematic diagram of a communication system provided by an exemplary embodiment of the disclosure.
FIG. 5 illustrates a schematic flowchart of a channel detection method provided by an exemplary embodiment of the disclosure.
FIG. 6 illustrates a schematic flowchart of a channel detection method provided by an exemplary embodiment of the disclosure.
FIG. 7 illustrates a schematic flowchart of a channel detection method provided by an exemplary embodiment of the disclosure.
FIG. 8 illustrates a schematic flowchart of a channel detection method provided by an exemplary embodiment of the disclosure.
FIG. 9 illustrates a schematic flowchart of a channel detection method provided by an exemplary embodiment of the disclosure.
FIG. 10 illustrates a schematic diagram of enabling or disabling multi-stage control detection provided by an exemplary embodiment of the disclosure.
FIG. 11 illustrates a schematic flowchart of a channel detection method provided by an exemplary embodiment of the disclosure.
FIG. 12 illustrates a schematic flowchart of a channel detection method provided by an exemplary embodiment of the disclosure.
FIG. 13 illustrates a schematic diagram of enabling or disabling multi-stage control detection provided by an exemplary embodiment of the disclosure.
FIG. 14 illustrates a schematic diagram of a channel detection method provided by an exemplary embodiment of the disclosure.
FIG. 15 illustrates a schematic flowchart of a channel detection method provided by an exemplary embodiment of the disclosure.
FIG. 16 illustrates a structural block diagram of a channel detection apparatus provided by an exemplary embodiment of the disclosure.
FIG. 17 illustrates a structural block diagram of a channel detection apparatus provided by an exemplary embodiment of the disclosure.
FIG. 18 illustrates a schematic structural diagram of a communication device provided by an exemplary embodiment of the disclosure.
FIG. 19 illustrates a schematic structural diagram of a communication device provided by an exemplary embodiment of the disclosure.

### DETAILED DESCRIPTION

In order to make the object, technical solution and advantages of the disclosure more clear, embodiments of the disclosure will be described in further detail below with reference to the accompanying drawings. Exemplary embodiments, examples of which are shown in the accompanying drawings, will be described in detail herein. In the following description made with reference to the drawings, the same numerals in different drawings denote the same or similar elements unless otherwise indicated. The implementations described in the following exemplary embodiments do not represent all implementations consistent with the disclosure. Rather, they are merely examples of devices and methods consistent with some aspects of the disclosure as detailed in the appended claims.

The terminology used in the disclosure is for the purpose of describing particular embodiments only and is not intended to limit the disclosure. As used in the disclosure and the appended claims, the singular forms "a" and "the" are also intended to include the plurality of forms unless the context clearly indicates otherwise. It should also be understood that the term "and/or" as used herein refers to including any or all possible combinations of one or more associated listed items.

It should be understood that although the terms first, second, third, etc. may be employed in the disclosure to describe various pieces of information, such information should not be limited to these terms. These terms are only used to distinguish the same type of information from each other. For example, the first information may also be referred to as the second information, and similarly, the second information may also be referred to as the first information without departing from the scope of the disclosure. Depending on the context, the word "if" as used herein may be interpreted as "at ..." or "when" or "in response to determining".

First, the communication technologies relating to the embodiments of the disclosure will be introduced.

Generally, one terminal device has one receiver. The terminal device receives signals and data through this receiver. This means that the receiver needs to remain on for a long time, or even monitor continuously, in order to meet the communication needs. However, such a receiver itself needs to use high power to work, and the power consumption caused by long-term remaining on or continuous monitoring is even huge. Obviously, the power consumption problem of the terminal device cannot be ignored and needs to be solved.

The transmission mechanism of Discontinuous Reception (DRX) is a communication technology that can be used to reduce the power consumption of terminal device. The main principle is to configure a DRX Cycle to a terminal device in a radio resource control connected state (RRC _ Connected), and use the DRX Cycle to realize discontinuous reception by the terminal device in the time domain. The DRX cycle consists of active time and inactive time. The active time is located after the DRX is enabled, or before an inactive timer is not turned on, or when the inactive timer does not expire. The active time may be referred to as the on duration, and the inactive time may be referred to as the off duration / opportunity for DRX.

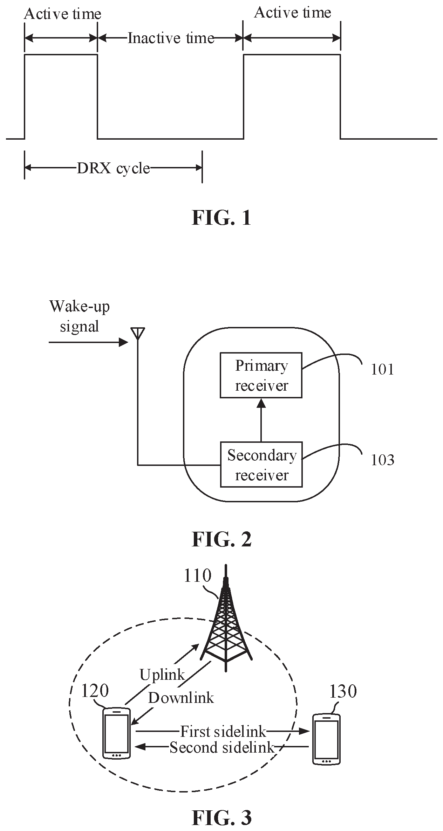

As shown in FIG. 1, the terminal device applying the transmission mechanism of DRX wakes up in each DRX cycle, monitors and receives Physical Downlink Control Channel (PDCCH) during the active time, and does not monitor and receive PDCCH during the inactive time, so as to achieve the effect of reducing power consumption.

However, the terminal device does not need to receive signals or data in every DRX cycle, so the waking up of the terminal device for monitoring in every DRX cycle still produces some meaningless wastage of power consumption.

Therefore, in order to further reduce the power consumption of the terminal device on the basis of the transmission mechanism of DRX, a wake-up Signal (WUS) mechanism is introduced to dynamically wake up the receiver of the terminal device. The US mechanism is a deeper sleep mode with extremely low cost, extremely low complexity and extremely low power consumption. If the receiver of the terminal device receives the WUS, it wakes up in the next DRX cycle and monitors or receives the PDCCH during the active time. If the receiver of the terminal device does not receive the WUS, it remains in a sleep state for the next one or more DRX cycles until the WUS is received. This design avoids the wastage of power consumption caused by the terminal device continuously and fixedly monitoring the PDCCH in each DRX cycle, and realizes further energy saving of the terminal device through dynamic wake-up.

In addition, adding a secondary receiver to the terminal device is also a communication technology that can be used to reduce the power consumption of the terminal device. As shown in FIG. 2, another receiver 103 is introduced based on the terminal device having one receiver 101. For ease of distinction, the receiver 101 may also be referred to as at least one of the following: a conventional receiver 101, a primary receiver 101, or a first receiver 101; and the receiver 103 may also be referred to as at least one of the following: a secondary receiver 103, a second receiver 103, a wake-up receiver (WUR) 103, or a low-power receiver 103. In the disclosure, the primary receiver 101 and the secondary receiver 103 are used, but this does not impose any limitations on naming. The newly introduced secondary receiver 103 can receive part of the signal instead of the primary receiver 101, that is, some operations that originally have to be performed by the primary receiver 101 can be performed by the secondary receiver 103 instead of the primary receiver 101. Furthermore, the primary receiver 101 can be kept in an off state all the time without being instructed to turn on by the secondary receiver 103, thereby avoiding meaningless wastage of power consumption when the primary receiver 101 does not need to receive signals or data. The power consumption level of the secondary receiver 103 is several orders of magnitude lower than the power consumption level of the conventional primary receiver 101. In general, the power consumption of the conventional receiver is greater than 100 milliwatts, while the power consumption of the low-power receiver may be less than 1 milliwatt, so that the operation performed by the secondary receiver 103 instead of the primary receiver 101 can significantly reduce the overall power consumption of the terminal device, and realize energy saving of the terminal device.

If the transmission mechanism of DRX, the WUS mechanism and the introduction of secondary receiver are combined, better energy saving effects can be achieved definitely. If the secondary receiver 103 receives the WUS, the primary receiver 101 is awakened dynamically; and if the secondary receiver 103 does not receive the WUS, the primary receiver 101 is not awakened, and the primary receiver 101 remains in the off state. Since the secondary receiver 103 does not need to achieve the power saving effect by being turned on or off as the primary receiver 101, instead, it can be activated by the WUS at any time and receive wake-up information, receiving the WUS by the secondary receiver 103 can reduce more power consumption than the scheme in which the primary receiver 101 receives the WUS. Therefore, the low power feature of the secondary receiver 103 can further improve the energy saving effect of the transmission mechanism of DRX and the WUS mechanism, and further reduce the overall power consumption of the terminal device.

When the secondary receiver 103 is designed, in order to realize the low power characteristics of the secondary receiver 103, the secondary receiver 103 usually adopts a minimalist hardware design, and the signals received by the secondary receiver 103 mostly have simple waveforms. If the scheme of receiving the WUS by the secondary receiver 103 is set for energy saving effect, the WUS also needs to be transmitted using a simple waveform, for example, the WUS is an envelope signal formed by ASK modulation.

The demodulation of the envelope signal may be accomplished by driving a low-power circuit based on an induced current generated by electromagnetic induction, or by driving the low-power circuit based on energy provided by a wireless radio frequency signal, thus the terminal device including the secondary receiver 103 may be passive or semi-passive. The demodulation of the envelope signal can also be done based on a built-in battery or power supply system of the device, thus the terminal device including the secondary receiver 103 can also be active.

The secondary receiver 103 may be combined with the primary receiver 101 as an additional module of the primary receiver 101; alternatively, the secondary receiver 103 serves as a separate module of the terminal device, such as a wake-up function module.

In a traditional control channel detection scheme, even if there is no data transmission, a terminal device needs to perform control channel detection on a slot-by-slot basis. Obviously, such a detection scheme will cause serious and meaningless wastage of power consumption.

If it is considered that the time for the terminal device to detect the control channel is adjusted by the power saving mode, for example, the terminal device detects or does not detect the control channel according to an indication of the power saving signal, although some meaningless detection behavior can be avoided, the detection of the power saving signal itself requires high power consumption. Moreover, considering that the traditional receiver itself has a high power consumption level, if the traditional receiver is allowed to keep monitoring, receiving and detecting the power saving signal for a long time, the effect of saving power consumption that can be achieved through the power saving mode is actually not significant, and there is still much room for improvement in the power consumption problem of the terminal device.

Therefore, the disclosure provides a channel detection method and apparatus, a device and a medium, and optimizes a channel detection scheme by introducing a first signal, which is helpful in reducing the wastage of power consumption.

FIG. 3 illustrates a schematic diagram of a wireless communication system provided by an exemplary embodiment of the disclosure. The wireless communication system includes a network device 110 and a terminal device 120, and/or the terminal device 120 and a terminal device 130, which is not limited in the disclosure.

The network device 110 in the disclosure provides wireless communication functions, including but not limited to: an Evolved Node B (eNB), a Radio Network Controller (RNC), a Node B (NB), a Base Station Controller (BSC), a Base Transceiver Station (BTS), a home base station (e.g., a Home Evolved Node B, or Home Node B (HNB)), a base band unit (BBU), an Access Point (AP), a Wireless Fidelity (Wi-Fi) system, a wireless relay node, a wireless Backhaul node, a Transmission Point (TP), or a Transmission and Reception Point (TRP), or the like; and it may also be a Next Generation Node B (gNB) or a transmission point (TRP or TP) in a 5th Generation (5G) mobile communication system, or one or a group (including a plurality of antenna panels) of panels of a base station in a 5G system; or, it may also be a network node constituting a gNB or a transmission point, such as a BBU or a Distributed Unit (DU) or the like, a base station or the like in a Beyond Fifth Generation (B5G) or a 6th Generation (6G) mobile communication system, a Core Network (CN), a Fronthaul, a Backhaul, a Radio Access Network (RAN), a network slice or the like, or an interrogator in a Radio Frequency Identification (RFID) system.

The terminal device 120 and/or the terminal device 130 in the embodiments of the disclosure may also be referred to as User Equipment (UE), an access terminal, a user unit, a user station, a mobile station, a remote station, a remote terminal, a mobile device, a user terminal, a terminal, a wireless communication device, a user agent or a user apparatus, etc. The terminal includes, but is not limited to, a handheld device, a wearable device, a vehicle device and an Internet of Things (IoT) device, such as an electronic tag, a controller, a mobile phone, a tablet, an e-book reader, a laptop portable computer, a desktop computer, a television, a game console, a mobile Internet device (MID), an Augmented Reality (AR) terminal, a Virtual Reality (VR) terminal and a Mixed Reality (MR) terminal, a wearable device, a handle, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, a wireless terminal in remote medical surgery, a cellular telephone, a cordless telephone, a Session Initiation Protocol (SIP) telephone, a Wireless Local Loop (WLL) station, a Personal Digital Assistant (PDA), a television Set Top Box (STB), a Customer Premise Equipment (CPE), and the like.

In some embodiments, the network device 110 and the terminal device 120 communicate with each other through some air interface technology, such as a Uu interface.

In some embodiments, there are two communication scenarios between the network device 110 and the terminal device 120: an uplink communication scenario and a downlink communication scenario. Herein, the uplink communication is to send a signal to the network device 110; and the downlink communication is to send a signal to the terminal device 120.

In some embodiments, the terminal device 120 and the terminal device 130 communicate with each other through a certain direction communication interface, such as a PC5 interface.

In some embodiments, there are two kinds of communication scenarios between the terminal device 120 and the terminal device 130: a first sidelink communication scenario and a second sidelink communication scenario. Herein, the first sidelink communication is to send a signal to the terminal device 130; and the second sideline communication is to send a signal to the terminal device 120.

In some embodiments, the terminal device 120 and the terminal device 130 are both within the network coverage and located in a same cell, or the terminal device 120 and the terminal device 130 are both within the network coverage but located in different cells, or the terminal device 120 is within the network coverage but the terminal device 130 is outside the network coverage.

The technical solutions provided by the embodiments of the disclosure can be applied to various communication systems, such as a Global System of Mobile communication (GSM) system, a Code Division Multiple Access (CDMA) system, and a Wideband Code Division Multiple Access (WCDMA) system, a General Packet Radio Service (GPRS), Long Term Evolution (LTE) system, an LTE Frequency Division Duplex (FDD) system, an LTE Time Division Duplex (TDD) system, an Advanced Long Term Evolution (LTE-A) system, a Universal Mobile Telecommunication System (UMTS), a Worldwide Interoperability for Microwave Access (WiMAX) communication system, a 5G mobile communication system, a New Radio (NR) system, an evolution system of the NR system, an LTE-based access to unlicensed spectrum (LTE-U) system, an NR-based access to unlicensed spectrum (NR-U) system, a Terrestrial Network (TN) system, a Non-Terrestrial Network (NTN) system, a Wireless Local Area Network (WLAN), a Wireless Fidelity (Wi-Fi) system, a cellular Internet of Things (IoT) system, a cellular passive IoT system, an Ambient Power Enabled IoT (Ambient IoT/A-IoT) system and a zero-power IoT system; may also be applied to a subsequent evolution system of the 5G NR system; and may further be applied to the B5G, the 6G and and subsequent evolution system thereof. In some embodiments of the disclosure, the "NR" may also be referred to as a 5G NR system or a 5G system. The 5G mobile communication system may include Non-Standalone (NSA) and/or Standalone (SA).

The technical solutions provided by the embodiments of the disclosure may also be applied to a Machine Type Communication (MTC), a Long Term Evolution-Machine (LTE-M), a Device to Device (D2D) network, a Machine to Machine (M2M) network, and Internet of Things (IoT) network, or another network. Herein, the IoT network may include, for example, Internet of Vehicles (IoV). Herein, the communication modes in an IoV system are collectively referred to as vehicle to other devices (Vehicle to X, V2X, X may represent anything), and for example, the V2X may include: Vehicle to Vehicle (V2V) communication, Vehicle to Infrastructure (V2I) communication, Vehicle to Pedestrian (V2P) communication, Vehicle to Network (V2N) communication, and the like.

The wireless communication system provided by the embodiment of the disclosure may be applied to, but is not limited to, at least one of the following communication scenarios: an uplink communication scenario, a downlink communication scenario, and a sidelink communication scenario.

In some embodiments, the terminal device 120 shown in FIG. 3 may be implemented as a low-power device. The low-power device may also be referred to as at least one of: an ultra-low-power device, a zero power device, a passive IoT device, or an Ambient Power EnabledInternet of Things (Ambient IoT/A-IoT) device. The communication technology implemented by the low-power device may also be referred to as at least one of: zero-power communication technology, ultra-low-power communication technology, low-power communication technology, Ambient IoT/A-IoT technology, passive IoT technology, or zero-power IoT technology.

Low-power devices can perform energy harvesting on energy in the environment (such as radio frequency energy, solar energy, light energy, thermal energy, mechanical energy, kinetic energy, etc.) to obtain energy for communication. Generally, low-power devices can be divided into the following three types based on energy sources and usage manner.
(1) Passive devices, which do not require built-in batteries. When a passive device approaches a network device (such as an interrogator of an RFID system), the passive device is in the near-field range formed by radiation of an antenna of the network device. Therefore, an antenna of the passive device generates an induced current through electromagnetic induction, and the induced current drives a low-power chip circuit of the passive device. In this way, the demodulation of forward link signals and the modulation of backward link signals are implemented. For backscatter links, the passive devices can transmit signals using backscattering or very low-power active transmission methods. Passive devices do not need built-in batteries to drive forward links or backward links, thus it can be considered that passive devices are zero-power devices.

Except not requiring batteries, the passive devices have radio frequency circuits and baseband circuits that are very simple. For example, they do not require LNAs, Power Amplifiers (PAs), crystal oscillators, Analog to Digital Converters (ADCs) and other devices, so that the passive devices are small in size, light in weight, and very cheap, have long service life and many other advantages.

Passive devices can also support other energy collection manners. By collecting energy in the environment (such as solar energy, light energy, thermal energy, kinetic energy, mechanical energy, etc.), the energy of the driving circuit is obtained, thereby realizing communication.

(2) Semi-passive devices, which are not equipped with a conventional battery. The semi-passive device can use a radio frequency energy harvesting module to collect radio wave energy, or use an energy harvesting module to collect energy in the environment (such as solar energy, light energy, thermal energy, kinetic energy, mechanical energy, etc.), and at the same time, store collected energy in an energy storage unit (such as a capacitor). After the energy storage unit obtains energy, it can drive the low-power chip circuit of the semi-passive device. In this way, the demodulation of forward link signals and the modulation of backward link signals are implemented. For backscatter links, semi-passive devices can perform signal transmission using backscattering. Semi-passive devices can also have active transmission capabilities, that is, in addition to the backscattering mode, communication can be performed in an active transmission mode for the backward link.

The semi-passive devices do not require built-in batteries to drive either the forward or backward link. Although they utilize energy stored in capacitors during operation, this energy is sourced from radio frequency (RF) or ambient energy harvested by the energy harvesting module. Therefore, semi-passive devices can also be considered zero-power devices.

The semi-passive device inherits many advantages of the passive device, such as small size, light weight, very cheap price, long service life and so on.

(3) Active devices, which can have built-in batteries. The battery is used to drive a low-power chip circuit of the active device. In this way, the demodulation of forward link signals and the modulation of backward link signals are implemented. The signal transmission of the backward link of the active device can realize the backward link transmission by the way of backscattering without consuming the power of the active device itself, so as to realize the effect of zero power consumption. The active devices can also have active transmission capabilities, that is, in addition to the backscattering mode, communication can be performed in an active transmission mode for the backward link.

Although there is a built-in battery, this type of active device has extremely low power consumption and complexity, so the capacity of the battery can be set in a small range, thus achieving a small cost and size. The battery built into the active device can also be used as an energy storage unit to store the environmental energy collected by the energy harvesting module, thus making the maintenance cycle of the active device longer or even maintenance-free.

In active devices, powering through the built-in battery is used to increase the communication distance of active devices, for example, the reading and writing distance of electronic tags is increased, so as to improve the reliability of communication. Therefore, active devices can be applied in some scenarios that have relatively high requirements on communication distance, reading delay, etc.

In terms of communication modes, low-power devices can support backscattering communication mode and/or active transmission mode. Generally, based on the type of the transmitter, low-power devices can be divided into the following three types:
(1) Low-power devices based on backscattering. Such zero power devices perform uplink data transmission using backscattering as described above. Such devices do not have an active transmitter for active transmission, but only a backscatter transmitter. Therefore, when the device transmits uplink data, the network device needs to provide a carrier wave, and the device performs backscattering based on the carrier wave to implement uplink data transmission.
(2) Low-power devices based on active transmitters. This type of device uses an active transmitter with active transmission capability for uplink data transmission. Therefore, when this type of device sends uplink data, it can send uplink data by using its own active transmitter without requiring the network device to provide carrier wave. Active transmitters suitable for such devices may be, for example, ultra-low-power ASK transmitters, ultra-low-power FSK transmitters, etc. Based on current implementations, the overall power consumption of such transmitters can be reduced to 400-600 microwatts when transmitting signals of 100 microwatts.
(3) Low-power devices with both backscattering and active transmitters. Such devices can support both backscattering and active transmitters. Such devices may determine whether to use the backscatter mode or the active transmitter for active transmission according to different situations (such as different battery levels, different available environmental energy sources), or based on the scheduling of the network device.

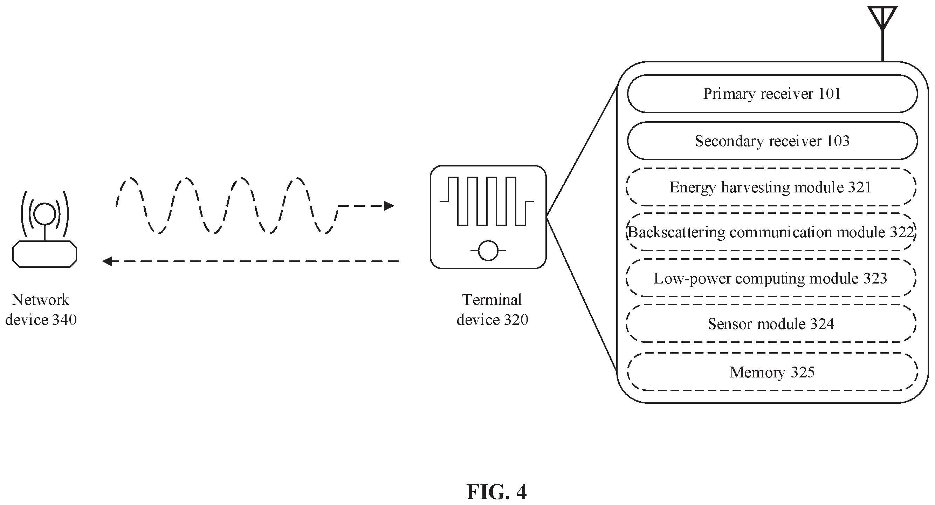

In some embodiments, the terminal device 120 may be implemented as the terminal device 320 as shown in FIG. 4, and the network device 110 may be implemented as the network device 340 as shown in FIG. 4.

The terminal device 320 includes a primary receiver 101 and a secondary receiver 103 as shown in FIG. 2. As can be seen from the foregoing, the secondary receiver 103 can significantly reduce the overall power consumption of the terminal device, and therefore, the terminal device 320 including the primary receiver 101 and the secondary receiver 103 can also be regarded as a low-power device. In some cases, it is supported that the terminal device 320 includes only the secondary receiver 103 (which may also be referred to as a low-power receiver), thereby achieving further power saving.

Optionally, the terminal device 320 further includes an energy harvesting module 321. Optionally, the terminal device 320 further includes a backscattering communication module 322. Optionally, the terminal device 320 further includes a low-power computing module 323. Optionally, the terminal device 320 further includes a sensor module 324. Optionally, the terminal device 320 further includes a memory 325. Optionally, in addition to the primary receiver 101 and the secondary receiver 103, the terminal device 320 further includes one or more of: an energy harvesting module 321, a backscattering communication module 322, a low-power computing module 323, a sensor module 324, and a memory 325.

Optionally, the energy harvesting module 321 can collect energy carried by radio waves in space to supply energy for driving each module of the terminal device 320. After obtaining energy, the terminal device 320 may receive signals from the network device 340 through the secondary receiver 103 and the primary receiver 101, or may transmit data to the network device 340 through the backscattering communication module 322. The data transmitted by the terminal device 320 may be data (such as an identity identifier or pre-written information, such as production date, brand, manufacturer, and/or the like of a product) stored by the terminal device 320. The sensor module 324 may include various types of sensors, and the terminal device 320 may report, based on the low-power mechanism, data collected by various types of sensors. The memory 325 is used to store some basic information (such as article identifier, etc.) or to obtain sensing data such as ambient temperature and ambient humidity.

Optionally, the terminal device 320 uses the low-power computing module 323 to perform simple signal demodulation, decoding, encoding, modulation and other simple computing work, and the hardware design thereof can be very simple, so that the terminal device 320 is very low in cost and small in size.

It should be understood that the modules included in the terminal device 320 illustrated in FIG. 4 are merely examples and are not limiting.

It is to be understood that in the embodiments of the disclosure, the term "correspond" may mean that there is a direct correspondence or an indirect correspondence between two items, may also mean that there is an association relationship between the two items, and may also be a relationship such as indication and being indicated, configuration and being configured, etc.

In the embodiments of the disclosure, the term "agreed" may be achieved by pre-storing corresponding codes, tables or other means used for indicating relevant information in communication devices (e.g., including terminal devices and network devices), and the specific implementation thereof is not limited in the disclosure. The expression "agreed by a communication protocol" may also be understood as "predefined by the communication protocol".

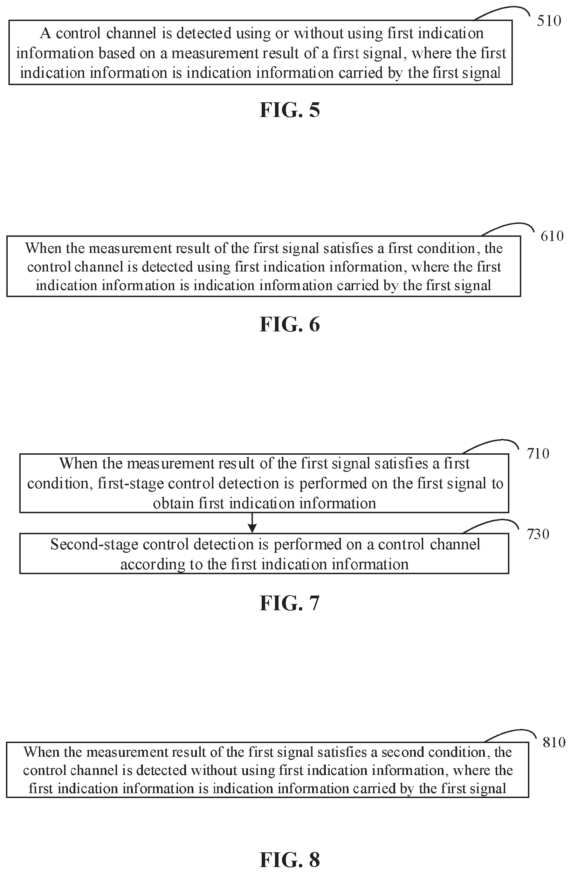

FIG. 5 illustrates a schematic flowchart of a channel detection method provided by an exemplary embodiment of the disclosure, and the method is performed by the terminal device shown in FIG. 1 or FIG. 2 or FIG. 3 or FIG. 4, and the method includes the following operation.

In an operation 510, a control channel is detected using or without using first indication information based on a measurement result of a first signal, where the first indication information is indication information carried by the first signal.

In the disclosure, the control channel includes, for example, one or more of: Physical Downlink Control Channel (PDCCH), and a Physical Sidelink Control Channel (PSCCH).

The first indication information is related to detection of the control channel, which may also be understood as that the first indication information is related to a control channel required to be detected.

The terminal device detects the control channel using or without using the first indication information based on the measurement result of the first signal, which may also be understood as that the terminal device detects the control channel using or without using the first indication information, where whether the first indication information is used is determined based on the measurement result of the first signal.

The detection of the control channel using the first indication information means that the detection of the control channel is performed according to the indication information carried by the first signal. Since the first indication information is related to the control channel, the terminal device can detect the control channel more accurately, quickly, and efficiently. Compared with the traditional scheme of blind detection on a slot-by-slot basis, adopting the first indication information can avoid a large number of meaningless detection behaviors by terminal device, improve the efficiency of channel detection and save power consumption.

The detection of the control channel without using the first indication information means that the detection of the control channel is performed not according to the indication information carried by the first signal. Then, the terminal device does not need to detect the first signal to acquire the first indication information, that is, the terminal device does not need to actually decode the first signal. Compared with traditional solutions, there is no additional significant wastage of power consumption.

In some embodiments, the first indication information instructes the terminal device not to detect the control channel. In this case, the terminal device needs to decode the first signal, but the terminal device does not need to consume resources to detect the control channel, thereby reducing the number of times of detecting the control channel, and the effect of saving power consumption is significant.

In some embodiments, the terminal device receives the first signal and/or the second signal, where the waveforms of the first signal and the second signal are different.

In some embodiments, the terminal device detects the first signal and/or the second signal, where the waveforms of the first signal and the second signal are different.

In summary, in the method provided by the embodiment of the disclosure, the detection of the control channel is adjusted by the measurement result of the first signal. If the control channel is detected using the first indication information, meaningless channel detection can be avoided, the efficiency of channel detection can be improved, and power consumption can be saved. If the first indication information indicates that the terminal device does not need to detect the control channel, the number of times of detecting the control channel is reduced, and the effect of saving power consumption is significant.

Compared with the conventional design in which the same detection scheme is adopted regardless of whether the communication quality is good or bad, the method provided by the embodiment of the disclosure has better flexibility, and since the channel detection scheme is associated with the measurement result of the first signal, the channel detection scheme actually adopted by the terminal device is matched with the current communication quality in the system, which helps to improve the efficiency and reliability of channel detection.

In some embodiments, the operation 510 may be implemented as an operation 610, as shown in FIG. 6. FIG. 6 illustrates a schematic flowchart of a channel detection method provided by an exemplary embodiment of the disclosure, and the method is performed by the terminal device shown in FIG. 1 or FIG. 2 or FIG. 3 or FIG. 4, and the method includes the following operation.

In an operation 610, when the measurement result of the first signal satisfies a first condition, the control channel is detected using first indication information, where the first indication information is indication information carried by the first signal.

In some embodiments, the first condition includes that a signal quality of the first signal is greater than a first threshold.

In some embodiments, the first threshold is agreed by a communication protocol, or indicated by a network device, or determined by the terminal device, or determined by negotiation between the network device and the terminal device.

In some embodiments, the signal quality of the first signal is represented by at least one of: Reference Signal Receiving Power (RSRP) value; Reference Signal Strength Indicator (RSSI) value; Reference Signal Receiving Quality (RSRQ) value; Signal to Interference plus Noise Ratio (SINR) value; Cross Link Interference (CLI) value; or Channel State Information (CSI) value..

In some embodiments, the first indication information is obtained by detecting the first signal by the terminal device, which may also be understood as that the first indication information is obtained by decoding the first signal by the terminal device.

In some embodiments, the first indication information instructs the terminal device to detect the control channel, or instructs the terminal device not to detect the control channel.

If the first indication information instructs the terminal device not to detect the control channel, although the terminal device needs to decode the first signal, the terminal device does not need to consume resources to detect the control channel, thus the number of times of detecting the control channel is reduced, and the effect of saving power consumption is significant.

In some embodiments, the terminal device receives the first signal and/or the second signal, where the waveforms of the first signal and the second signal are different.

In some embodiments, the terminal device detects the first signal and/or the second signal, where the waveforms of the first signal and the second signal are different.

In some embodiments, the transmission of the control channel is performed by adopting a waveform of the second signal.

In some embodiments, the first signal adopts any one of: On-Off Keying (OOK) waveform, Multi-Carrier OOK (MC-OOK) waveform, Frequency Shift Keying (FSK) waveform, Phase Shift Keying (PSK) waveform, Binary Phase Shift Keying (BPSK) waveform, and Amplitude Shift Keying (ASK) waveform.

In some embodiments, the second signal adopts any one of: Orthogonal Frequency-Division Multiplexing (OFDM) waveform, Quadrature Amplitude Modulation (QAM) waveform, and Quadrature Phase Shift Keying (QPSK) waveform.

It can be seen that the waveform adopted by the first signal is simpler than the waveform adopted by the second signal, and the power consumption required for generating, receiving and detecting the first signal is lower than the power consumption required for generating, receiving and detecting the second signal. Accordingly, the first signal may be considered to be a low-power consumption signal compared to the second signal.

In some embodiments, the first signal adopts any one of the following modulation schemes: OOK modulation, MC-OOK modulation, FSK modulation, PSK modulation, BPSK modulation, and ASK modulation.

In some embodiments, the second signal adopts any one of the following modulation schemes: OFDM modulation, QAM modulation, and QPSK modulation.

In some embodiments, the first signal is generated using at least one of the following sequences: Pseudo-Noise (PN) sequence; m sequence; gold sequence; or Hadamard sequence.

Herein, the pseudo-noise sequence may also be referred to as a pseudo-random sequence. The m sequence is also referred to as a maximum-length linear feedback shift register sequence or a maximum-length sequence. The gold sequence is formed by modulo-2 addition of m-sequences from a preferred pair.

The binary sequence according to the disclosure is a sequence including sequence elements having only two types of values, which may also be understood as that each bit in the binary sequence has only two possible values. For example, any bit in the PN sequence, the m sequence and the gold sequence has a value of "1" or "0". For example, the value of any bit in the Hadamard sequence is "+1" or "-1".

In some embodiments, the first signal is a periodically transmitted signal, or the first signal is an aperiodically transmitted signal.

In some embodiments, the first signal is related to a cell, which may also be understood as that the first signal is a cell-level signal, or that the first signal is applicable to all terminal devices in one cell.

In some embodiments, the first signal is related to a cell group, which may also be understood as that the first signal is a cell-group-level signal, or that the first signal is applicable to all terminal devices in one cell group.

In some embodiments, the terminal device includes a primary receiver and a secondary receiver. The primary receiver may also be referred to as at least one of the following: a conventional receiver, or a first receiver. The secondary receiver may also be referred to as at least one of the following: a second receiver, a wake-up receiver, or a low-power receiver. Herein, the power consumption of the secondary receiver is lower than the power consumption of the primary receiver. Optionally, the complexity of the secondary receiver is lower than the complexity of the primary receiver.

In some embodiments, the first signal is received by the secondary receiver, and the second signal is received by the primary receiver.

In some embodiments, the first signal is a wake-up signal.

In some embodiments, a type of the second signal includes at least one of the following: Synchronization Signal and PBCH Block (SS/PBCH Block, SSB); Channel State Information Reference Signal (CSI-RS); Tracking Reference Signal (TRS); Phase Tracking Reference Signal (PT-RS); Demodulation Reference Signal (DMRS); or Sounding Reference Signal (SRS).

In summary, in the method provided by the embodiment of the disclosure, when the measurement result of the first signal satisfies the first condition, the control channel is detected using the first indication information. Since the first indication information is related to the control channel, the terminal device can detect the control channel more accurately, quickly, and efficiently. Compared with the traditional scheme of blind detection on a slot-by-slot basis, adopting the first indication information can avoid a large number of meaningless detection behaviors by the terminal device, thereby significantly saving power consumption.

Further, the first signal waveform provided by the embodiment of the disclosure is simple, and the power consumption required by the terminal device to monitor, receive, measure, and detect the first signal is extremely low. Therefore, whether compared with monitoring the control channel or compared with monitoring the power-saving signal, the power consumption required for channel detection by monitoring the first signal is significantly less than the power consumption required for monitoring the control channel in the traditional scheme, and also significantly less than the power consumption required for monitoring and detecting the power-saving signal.

Further, compared with monitoring and receiving a signal by a conventional receiver, when the first signal is monitored and received by a secondary receiver having the characteristics of low power consumption and low complexity, the overall power consumption of the channel detection process can be further reduced.

Compared with the traditional design of adopting the same detection scheme regardless of whether the communication quality is good or bad, the method provided by the embodiment of the disclosure also has better flexibility. Moreover, since the channel detection scheme is associated with the measurement result of the first signal, the channel detection scheme actually adopted by the terminal device is matched with the current communication quality in the system, which helps to improve the efficiency and reliability of channel detection.

In some embodiments, when the measurement result of the first signal satisfies the first condition, the multi-stage control detection is enabled. The multi-stage control detection includes a first-stage control detection and a second-stage control detection.

Further, the operation 610 may also be implemented as operation 710 and operation 730, as shown in FIG. 7.

In an operation 710, when the measurement result of the first signal satisfies a first condition, first-stage control detection is performed on the first signal to obtain first indication information
When the first indication information instructs the terminal device to detect a control channel, the indication information carried by the first signal is associated with channel control detection, which may also be understood as that the indication information carried by the first signal is associated with a control channel to be detected. Therefore, the detection of the first signal can be understood as the first-stage detection during a process of detecting the control channel.

In some embodiments, the first signal is a periodically transmitted signal. The terminal device periodically measures the first signal, periodically acquires a measurement result of the first signal, and periodically determines whether the measurement result of the first signal satisfies the first condition.

In some embodiments, the first signal is an aperiodically transmitted signal. The terminal device aperiodically measures the first signal, aperiodically acquires a measurement result of the first signal, and aperiodically determines whether the measurement result of the first signal satisfies the first condition.

For related contents, reference can be made to the operation 610, which will not be repeated here.

In an operation 730, second-stage control detection is performed on a control channel according to the first indication information.

The detection of the control channel follows the detection of the first signal, and therefore, the detection of the control channel can be understood as the second-stage detection during the process of detecting the control channel.

In a case where the first indication information instructs the terminal device not to detect the control channel, the terminal device does not perform the operation 730. That is to say, the terminal device does not need to consume resources to perform the second-stage control detection, which reduces the number of times of detecting the control channel, and has a significant effect of saving power consumption.

In the embodiment of the disclosure, what mainly discussed is a case where the first indication information instructs the terminal device to detect the control channel.

In some embodiments, when the first indication information includes a first identification, and/or the first indication information is used to indicate detection of a control channel associated with the first identification, the second-stage control detection is performed on the control channel associated with the first identification.

In some embodiments, the first indication information carries a first identifier. If the first indication information carries the first identifier, it means that the first indication information is used to instruct the terminal device to detect the control channel associated with the first identifier.

In some embodiments, the first indication information indicates, through a bitmap, whether to detect a control channel associated with the first identification. Exemplarily, the bitmap includes a plurality of bits in one-to-one correspondence with a plurality of first identifiers. When a bit has a first value, the terminal device is instructed to detect a control channel associated with a first identifier corresponding to the bit; when a bit has a second value, the terminal device is instructed to not detect a control channel associated with a first identifier corresponding to the bit. Herein, the first value is "1" and the second value is "0"; alternatively, the first value is "0" and the second value is "1". Of course, the first value and the second value may be other numerical values, as long as the first value and the second value are different.

In some embodiments, the first identifier includes at least one of: a network identifier (ID); an access ID of the terminal device; an access group identifier (AG ID) of terminal device; a physical ID of the terminal device; or a hardware identifier of the terminal device.

In some embodiments, the network identifier is associated with a first cell identifier, and/or the network identifier is associated with a first beam identifier. Herein, the first cell identifier is a cell identifier corresponding to the second signal, and the first beam identifier is a beam identifier corresponding to the second signal.

In some embodiments, the network identifier is associated with one cell identifier, or the network identifier is associated with multiple cell identifiers; or the network identifier is associated with one cell group identifier, or the network identifier is associated with multiple cell group identifiers. It may also be understood that the network identifier carried by the first indication information corresponds to one cell identifier, or the network identifier carried by the first indication information corresponds to multiple cell identifiers; or the network identifier carried by the first indication information corresponds to one cell group identifier, or the network identifier carried by the first indication information corresponds to multiple cell group identifiers.

If the network identifier corresponds to one cell identifier, it means that the first indication information is only applicable to a cell corresponding to the cell identifier. If the network identifier corresponds to multiple cell identifiers, it means that the first indication information is applicable to multiple cells corresponding to the multiple cell identifiers.

In some embodiments, the network identifier is associated with one beam identifier, or the network identifier is associated with multiple beam identifiers. It may also be understood that the network identifier carried by the first indication information corresponds to one beam identifier, or the network identifier carried by the first indication information corresponds to multiple beam identifiers.

If the network identifier corresponds to one beam identifier, it means that the first indication information is only applicable to a control channel transmitted by a beam corresponding to the one beam identifier. If the network identifier corresponds to multiple beam identifiers, it means that the first indication information is applicable to a control channel transmitted by at least one of beams corresponding to the multiple beam identifiers.

In some embodiments, the access identifier and the access group identifier of the terminal device are obtained during a registration process of the terminal device.

In some embodiments, by carrying or not carrying the first identifier, the first indication information indicates whether to detect the control channel by the terminal device.

For example, the first identifier carried by the first indication information includes an access identifier, and if the access identifier carried by the first indication information is consistent with an access identifier of the terminal device, it is indicated that the first indication information instructs the terminal device to detect the control channel, and if the access identifier carried by the first indication information is not consistent with the access identifier of the terminal device, it is indicated that the first indication information does not instruct the terminal device to detect the control channel.

For example, the first identifier carried by the first indication information includes an access group identifier, and if the access group identifier carried by the first indication information is consistent with an access group identifier of the terminal device, it is indicated that the first indication information instructs the terminal device to detect the control channel, and if the access group identifier carried by the first indication information is not consistent with the access group identifier of the terminal device, it is indicated that the first indication information does not instruct the terminal device to detect the control channel.

For example, the first identifier carried by the first indication information includes a physical identifier, and if the physical identifier carried by the first indication information is consistent with a physical identifier of the terminal device, it is indicated that the first indication information instructs the terminal device to detect the control channel, and if the physical identifier carried by the first indication information is not consistent with the physical identifier of the terminal device, it is indicated that the first indication information does not instruct the terminal device to detect the control channel.

For example, the first identifier carried by the first indication information includes a hardware identifier, and if the hardware identifier carried by the first indication information is consistent with a hardware identifier of the terminal device, it is indicated that the first indication information instructs the terminal device to detect the control channel, and if the hardware identifier carried by the first indication information is not consistent with the hardware identifier of the terminal device, it is indicated that the first indication information does not instruct the terminal device to detect the control channel.

For related contents, reference can be made to the operations 510 and 610, which will not be repeated here.

In summary, the method provided by the embodiment of the disclosure enables multi-stage control detection when the measurement result of the first signal satisfies the first condition. Since the power consumption required by the first-stage control detection is much lower than the power consumption required by the second-stage control detection, through the first signal with low power consumption, the terminal device is supported to determine whether to detect the control channel, to make clear how to detect the control channel, and to make clear which control channel to detect. It is thus possible to not only reduce the overall power consumption of the channel detection process, but also improve the efficiency of channel detection and avoid meaningless channel detection behavior.

Further, the first signal waveform provided by the embodiment of the disclosure is simple, and the power consumption required by the terminal to monitor, receive, measure, and detect the first signal is extremely low. Therefore, whether compared with monitoring the control channel or compared with monitoring the power-saving signal, the power consumption required for channel detection by monitoring the first signal is significantly less than the power consumption required for monitoring the control channel in the traditional scheme, and also significantly less than the power consumption required for monitoring and detecting the power-saving signal.

Further, compared with monitoring and receiving a signal by a conventional receiver, when the first signal is monitored and received by a secondary receiver having the characteristics of low power consumption and low complexity, the overall power consumption of the channel detection process can be further reduced.

Compared with the traditional design of adopting the same detection scheme regardless of whether the communication quality is good or bad, the method provided by the embodiment of the disclosure also has better flexibility. Moreover, since the channel detection scheme is associated with the measurement result of the first signal, the channel detection scheme actually adopted by the terminal device is matched with the current communication quality in the system, which helps to improve the efficiency and reliability of channel detection.

In some embodiments, the operation 510 may be implemented as an operation 810, as shown in FIG. 8. FIG. 8 illustrates a schematic flowchart of a channel detection method provided by an exemplary embodiment of the disclosure, and the method is performed by the terminal device shown in FIG. 1 or FIG. 2 or FIG. 3 or FIG. 4, and the method includes the following operation.

In an operation 810, when the measurement result of the first signal satisfies a second condition, the control channel is detected without using first indication information, where the first indication information is indication information carried by the first signal.

In some embodiments, the second condition includes at least one of: a signal quality of the first signal is less than a second threshold; acquisition of the measurement result of the first signal is unsuccessful; or acquisition of the first indication information is unsuccessful.

However, the unsuccessful acquisition of the first indication information may be understood as the failure to detect the first signal or the failure to decode the first signal.

In some embodiments, the second threshold is agreed by a communication protocol, or indicated by a network device, or determined by the terminal device, or determined by negotiation between the network device and the terminal device.

In some embodiments, the second threshold is a difference between the measurement result of the first signal and a measurement result of the second signal.

Exemplarily, the second threshold is 0 dB, or - 3 dB, or - 6 dB, or - 9 dB, or - 12 dB, or - 20 dBm, or - 40 dBm, or - 60 dBm, or - 80 dBm. Exemplarily, the second threshold is preconfigured by the network device. Exemplarily, the first threshold is configured by the network device through higher-layer signaling.

In some embodiments, the signal quality of the first signal is represented by at least one of: RSRP value; RSSI value; RSRQ value; SINR value; CLI value; or CSI value.

In some embodiments, the terminal device receives the first signal and/or the second signal, where the waveforms of the first signal and the second signal are different.

In some embodiments, the terminal device detects the first signal and/or the second signal, where the waveforms of the first signal and the second signal are different.

In some embodiments, the transmission of the control channel is performed by adopting a waveform of the second signal.

For contents such as the waveforms, modulation schemes, generation sequences and the like of the first signal and the second signal, reference can be made to the operation 610, which will not be repeated here.

In some embodiments, the first signal is a periodically transmitted signal, or the first signal is an aperiodically transmitted signal.

In some embodiments, the first signal is related to a cell, which may also be understood as that the first signal is a cell-level signal, or that the first signal is applicable to all terminal devices in one cell.

In some embodiments, the first signal is related to a cell group, which may also be understood as that the first signal is a cell-group-level signal, or that the first signal is applicable to all terminal devices in one cell group.

In some embodiments, the terminal device includes a primary receiver and a secondary receiver. The primary receiver may also be referred to as at least one of the following: a conventional receiver, or a first receiver. The secondary receiver may also be referred to as at least one of the following: a second receiver, a wake-up receiver, or a low-power receiver. Herein, the power consumption of the secondary receiver is lower than the power consumption of the primary receiver. Optionally, the complexity of the secondary receiver is lower than the complexity of the primary receiver.

In some embodiments, the first signal is received by the secondary receiver, and the second signal is received by the primary receiver.

In some embodiments, the first signal is a wake-up signal.

In some embodiments, the type of the second signal includes at least one of: SSB; CSI-RS; TRS; PT- RS; DMRS; or SRS.

In summary, in the method provided by the embodiment of the disclosure, when the measurement result of the first signal satisfies the second condition, the control channel is detected without using the first indication information. Since it is not necessary to decode the first signal, there is actually no additional significant wastage of power consumption.

Further, the first signal waveform provided by the embodiment of the disclosure is simple, and the power consumption required by the terminal to monitor, receive, measure, and detect the first signal is extremely low. Therefore, whether compared with monitoring the control channel or compared with monitoring the power-saving signal, the power consumption required for channel detection by monitoring the first signal is significantly less than the power consumption required for monitoring the control channel in the traditional scheme, and also significantly less than the power consumption required for monitoring and detecting the power-saving signal.

Further, compared with monitoring and receiving a signal by a conventional receiver, when the first signal is monitored and received by a secondary receiver having the characteristics of low power consumption and low complexity, the overall power consumption of the channel detection process can be further reduced.

Compared with the traditional design of adopting the same detection scheme regardless of whether the communication quality is good or bad, the method provided by the embodiment of the disclosure also has better flexibility. Moreover, since the channel detection scheme is associated with the measurement result of the first signal, the channel detection scheme actually adopted by the terminal device is matched with the current communication quality in the system, which helps to improve the efficiency and reliability of channel detection.

In some embodiments, when the measurement result of the first signal satisfies the second condition, the multi-stage control detection is disabled.

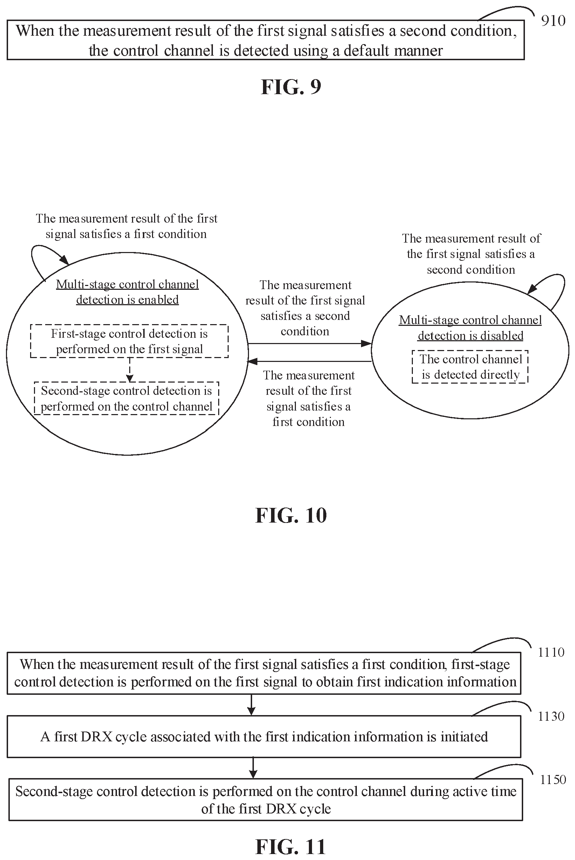

Further, the operation 810 may also be implemented as an operation 910, as shown in FIG. 9.

In an operation 910, when the measurement result of the first signal satisfies a second condition, the control channel is detected using a default manner.

In some embodiments, the default manner includes at least one of the following: a channel detection manner agreed by a communication protocol, or a traditional channel detection manner.

In some embodiments, when the measurement result of the first signal satisfies the second condition, the terminal device directly detects the control channel.

In some embodiments, when the measurement result of the first signal satisfies the second condition, the terminal device monitors the control channel.

In some embodiments, when the measurement result of the first signal satisfies the second condition, the terminal device no longer monitors or receives the first signal. As can be seen from the foregoing, the first signal can be regarded as a low-power signal, and therefore, the fact that the terminal device no longer monitors or receives the first signal can be understood as that the terminal device no longer maintains a low-power reception state, or that the terminal device switches to an ordinary reception state or a normal reception state.

In some embodiments, the first signal is a periodically transmitted signal. The terminal device periodically measures the first signal, periodically acquires a measurement result of the first signal, and periodically determines whether the measurement result of the first signal satisfies the second condition.

In some embodiments, the first signal is an aperiodically transmitted signal. The terminal device aperiodically measures the first signal, aperiodically acquires a measurement result of the first signal, and aperiodically determines whether the measurement result of the first signal satisfies the second condition.

For related contents, reference can be made to the operations 510 and 810, which will not be repeated here.

In summary, the method provided by the embodiment of the disclosure enables multi-stage control detection when the measurement result of the first signal satisfies the second condition. A feasible channel detection scheme is provided for a case where it is impossible to determine whether to detect the control channel and make clear how to detect the control channel through the first indication information.

Further, the first signal waveform provided by the embodiment of the disclosure is simple, and the power consumption required by the terminal to monitor, receive, measure, and detect the first signal is extremely low. Therefore, whether compared with monitoring the control channel or compared with monitoring the power-saving signal, the power consumption required for channel detection by monitoring the first signal is significantly less than the power consumption required for monitoring the control channel in the traditional scheme, and also significantly less than the power consumption required for monitoring and detecting the power-saving signal.

Further, compared with monitoring and receiving a signal by a conventional receiver, when the first signal is monitored and received by a secondary receiver having the characteristics of low power consumption and low complexity, the overall power consumption of the channel detection process can be further reduced.

Compared with the traditional design of adopting the same detection scheme regardless of whether the communication quality is good or bad, the method provided by the embodiment of the disclosure also has better flexibility. Moreover, since the channel detection scheme is associated with the measurement result of the first signal, the channel detection scheme actually adopted by the terminal device is matched with the current communication quality in the system, which helps to improve the efficiency and reliability of channel detection.

FIG. 10 illustrates a schematic diagram of enabling multi-stage control detection and disabling multi-stage control detection. If the measurement result of the first signal satisfies a first condition, the multi-stage control detection is enabled, the first signal is firstly detected to obtain the first indication information, and then the control channel is detected according to the first indication information. If the measurement result of the first signal satisfies a second condition, the multi-stage control detection is not enabled, and the control channel is directly detected.

In some embodiments, when the measurement result of the first signal satisfies the first condition, the multi-stage control detection is enabled. The multi-stage control detection includes a first-stage control detection and a second-stage control detection.

Further, the operation 610 may also be implemented as operation 1110, operation 1130 and operation 1150, as shown in FIG. 11. FIG. 11 illustrates a schematic flowchart of a channel detection method provided by an exemplary embodiment of the disclosure, and the method is performed by the terminal device shown in FIG. 1 or FIG. 2 or FIG. 3 or FIG. 4, and the method includes the following operation.

In an operation 1110, when the measurement result of the first signal satisfies a first condition, first-stage control detection is performed on the first signal to obtain first indication information

In some embodiments, the first indication information instructs the terminal device to detect the control channel, or instructs the terminal device not to detect the control channel.

If the first indication information indicates that the terminal device does not detect the control channel, although the terminal device needs to decode the first signal, the terminal device does not need to consume resources to detect the control channel, thus the number of times of detecting the control channel is reduced, and the effect of saving power consumption is significant.

In the embodiment of the disclosure, what mainly discussed is a case where the first indication information instructs the terminal device to detect the control channel.

When the first indication information instructs the terminal device to detect a control channel, the indication information carried by the first signal is associated with channel control detection, which may also be understood as that the indication information carried by the first signal is associated with a control channel to be detected. Therefore, the detection of the first signal can be understood as the first-stage detection during a process of detecting the control channel.

In some embodiments, the first signal is a periodically transmitted signal. The terminal device periodically measures the first signal, periodically acquires a measurement result of the first signal, and periodically determines whether the measurement result of the first signal satisfies the first condition.

In some embodiments, the first signal is an aperiodically transmitted signal. The terminal device aperiodically measures the first signal, aperiodically acquires a measurement result of the first signal, and aperiodically determines whether the measurement result of the first signal satisfies the first condition.

For related contents, reference can be made to the operation 610, which will not be repeated here.

In some embodiments, the first indication information carries a first identifier. If the first indication information carries the first identifier, it means that the first indication information is used to instruct the terminal device to detect the control channel associated with the first identifier, and/or instruct the terminal device to initiate the first DRX cycle.

In some embodiments, the first indication information indicates, through a bitmap, whether to detect a control channel associated with the first identification, and.or whether to initiate the first DRX cycle.

Exemplarily, the bitmap includes a plurality of bits in one-to-one correspondence with a plurality of first identifiers. When a bit has a first value, the terminal device is instructed to detect a control channel associated with a first identifier corresponding to the bit; when a bit has a second value, the terminal device is instructed to not detect a control channel associated with a first identifier corresponding to the bit.

Exemplarily, the bitmap includes a plurality of bits in one-to-one correspondence with a plurality of DRX cycles. When a bit has a first value, the terminal device is instructed to initiate a DRX cycle corresponding to the bit; when a bit has a second value, the terminal device is instructed to not initiate a DRX cycle corresponding to the bit.

Herein, the first value is "1" and the second value is "0"; alternatively, the first value is "0" and the second value is "1". Of course, the first value and the second value may be other numerical values, as long as the first value and the second value are different.

For contents related to the first identifier, reference can be made to the operation 730, which will not be repeated here.

In some embodiments, by carrying or not carrying the first identifier, the first indication information indicates whether to detect the control channel by the terminal device.

In some embodiments, by carrying or not carrying the first identifier, the first indication information indicates whether to initiate the first DRX cycle by the terminal device.

In an operation 1130, a first DRX cycle associated with the first indication information is initiated.

In some embodiments, the first indication information instructs the terminal device to initiate the first DRX cycle.

In some embodiment, when the first indication information includes a first identifier and/or the first indication information is used to indicate detection of a control channel associated with the first identifier, the first DRX cycle is initiated. The first DRX cycle is associated with the first identifier.

In some embodiments, the first DRX cycle is agreed by a communication protocol, or indicated by a network device, or determined by the terminal device, or determined by negotiation between the network device and the terminal device.

In an operation 1150, second-stage control detection is performed on the control channel during active time of the first DRX cycle.

The active time may also be referred to as on duration.

The detection of the control channel follows the detection of the first signal, and therefore, the detection of the control channel can be understood as the second-stage detection during the process of detecting the control channel.

In some embodiments, the second-stage control detection is not performed on the control channel during inactive time of the first DRX cycle. It can also be understood as that the terminal device is in a dormant state during the inactive time of the first DRX cycle. Herein, the inactive time may also be referred to as a dormant period (or off duration / opportunity for DRX).

In some embodiments, when the first indication information includes a first identification, and/or the first indication information is used to indicate detection of a control channel associated with the first identification, the second-stage control detection is performed on the control channel associated with the first identification.

In some embodiments, the second-stage control detection is performed on the control channel associated with the first identifier during the active time of the first DRX cycle.

For related contents, reference can be made to the operations 510 and 610, which will not be repeated here.

In summary, the method provided by the embodiment of the disclosure enables multi-stage control detection when the measurement result of the first signal satisfies the first condition. Since the power consumption required by the first-stage control detection is much lower than the power consumption required by the second-stage control detection, through the first signal with low power consumption, the terminal device is supported to determine whether to detect the control channel, to make clear how to detect the control channel, and to make clear which control channel to detect. It is thus possible to not only reduce the overall power consumption of the channel detection process, but also improve the efficiency of channel detection and avoid meaningless channel detection behavior.

Moreover, the multi-stage control detection is combined with the first DRX cycle in the embodiment of the disclosure, the terminal device is enabled to detect the control channel during the active time of the DRX cycle, and not detect the control channel during the inactive time, thereby further reducing power consumption on the basis of enabling the multi-stage control detection.

Further, the first signal waveform provided by the embodiment of the disclosure is simple, and the power consumption required by the terminal to monitor, receive, measure, and detect the first signal is extremely low. Therefore, whether compared with monitoring the control channel or compared with monitoring the power-saving signal, the power consumption required for channel detection by monitoring the first signal is significantly less than the power consumption required for monitoring the control channel in the traditional scheme, and also significantly less than the power consumption required for monitoring and detecting the power-saving signal.

Further, compared with monitoring and receiving a signal by a conventional receiver, when the first signal is monitored and received by a secondary receiver having the characteristics of low power consumption and low complexity, the overall power consumption of the channel detection process can be further reduced.

Compared with the traditional design of adopting the same detection scheme regardless of whether the communication quality is good or bad, the method provided by the embodiment of the disclosure also has better flexibility. Moreover, since the channel detection scheme is associated with the measurement result of the first signal, the channel detection scheme actually adopted by the terminal device is matched with the current communication quality in the system, which helps to improve the efficiency and reliability of channel detection.

In some embodiments, when the measurement result of the first signal satisfies the second condition, the multi-stage control detection is disabled.

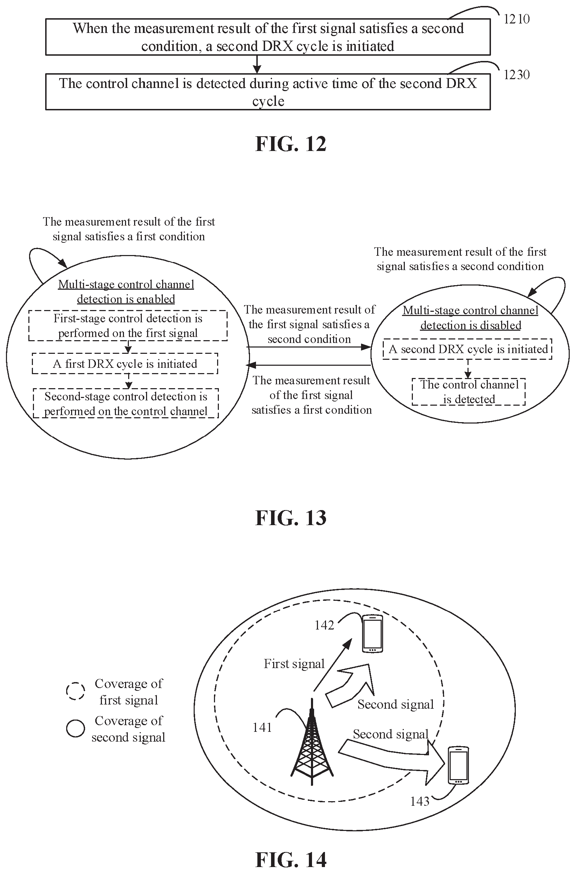

Further, the operation 810 may also be implemented as operation 1210 and operation 1230, as shown in FIG. 12.

In an operation 1210, when the measurement result of the first signal satisfies a second condition, a second DRX cycle is initiated.

In some embodiments, the second DRX cycle is a default DRX cycle. Herein, the default DRX cycle includes at least one of: a DRX cycle agreed by the communication protocol, a DRX cycle independent of the first identifier, or a DRX cycle independent of the multi-stage control detection.

In some embodiments, when the measurement result of the first signal satisfies the second condition, the terminal device directly detects the control channel.

In some embodiments, when the measurement result of the first signal satisfies the second condition, the terminal device monitors the control channel during active time of the second DRX cycle.

In some embodiments, when the measurement result of the first signal satisfies the second condition, the terminal device no longer monitors or receives the first signal. As can be seen from the foregoing, the first signal can be regarded as a low-power signal, and therefore, the fact that the terminal device no longer monitors or receives the first signal can be understood as that the terminal device no longer maintains a low-power reception state, or that the terminal device switches to an ordinary reception state or a normal reception state.

In some embodiments, the first signal is a periodically transmitted signal. The terminal device periodically measures the first signal, periodically acquires a measurement result of the first signal, and periodically determines whether the measurement result of the first signal satisfies the second condition.

In some embodiments, the first signal is an aperiodically transmitted signal. The terminal device aperiodically measures the first signal, aperiodically acquires a measurement result of the first signal, and aperiodically determines whether the measurement result of the first signal satisfies the second condition.

For related contents, reference can be made to the operations 510 and 810, which will not be repeated here.

In an operation 1230, the control channel is detected during active time of the second DRX cycle.

In some embodiments, the control channel is not detected during inactive time of the second DRX cycle. It can also be understood that the terminal device is in a sleep state during the inactive time of the second DRX cycle. Herein, the inactive time may also be referred to as a dormant period (or off duration / opportunity for DRX).

In summary, the method provided by the embodiment of the disclosure enables multi-stage control detection when the measurement result of the first signal satisfies the second condition. A feasible channel detection scheme is provided for a case where it is impossible to determine whether to detect the control channel and make clear how to detect the control channel through the first indication information.

Further, the detection of the control channel is combined with the second DRX cycle in the embodiment of the disclosure, so that the terminal device detects the control channel during the active time of the DRX cycle and does not detect the control channel during the inactive time. Compared with the scheme of continuously monitoring the control channel, the method provided in the embodiment of the disclosure reduces the power consumption of the terminal device.

Further, the first signal waveform provided by the embodiment of the disclosure is simple, and the power consumption required by the terminal to monitor, receive, measure, and detect the first signal is extremely low. Therefore, whether compared with monitoring the control channel or compared with monitoring the power-saving signal, the power consumption required for channel detection by monitoring the first signal is significantly less than the power consumption required for monitoring the control channel in the traditional scheme, and also significantly less than the power consumption required for monitoring and detecting the power-saving signal.

Further, compared with monitoring and receiving a signal by a conventional receiver, when the first signal is monitored and received by a secondary receiver having the characteristics of low power consumption and low complexity, the overall power consumption of the channel detection process can be further reduced.

Compared with the traditional design of adopting the same detection scheme regardless of whether the communication quality is good or bad, the method provided by the embodiment of the disclosure also has better flexibility. Moreover, since the channel detection scheme is associated with the measurement result of the first signal, the channel detection scheme actually adopted by the terminal device is matched with the current communication quality in the system, which helps to improve the efficiency and reliability of channel detection.

FIG. 13 illustrates a schematic diagram of enabling multi-stage control detection and disabling multi-stage control detection. If the measurement result of the first signal satisfies the first condition, the multi-stage control detection is enabled, the first signal is firstly detected to obtain the first indication information, the first DRX cycle associated with the first identifier is then initiated, and the control channel is detected within the active time of the first DRX cycle according to the first indication information. If the measurement result of the first signal satisfies the second condition, the multi-stage control detection is disabled, the second DRX cycle is initiated, and the control channel is detected within the active time of the second DRX cycle.

FIG. 14 illustrates a schematic diagram of a channel detection method provided by an exemplary embodiment of the disclosure. A network device 141 sends a first signal and a second signal, and the waveforms of the first signal and the second signal are different. Optionally, the waveform of the first signal is simpler than the waveform of the second signal, and optionally, the power consumption required to detect the first signal is lower than the power consumption required to detect the second signal.

A UE 142 is located within the coverage of the first signal, the UE 142 receives and measures the first signal, and when the signal quality of the first signal is higher than the first threshold, the UE 142 decodes the first signal to obtain first indication information, and then detects a control channel according to the first indication information.

A UE 143 is unable to receive the first signal; or, the signal quality of the first signal acquired by the UE 143 is lower than the second threshold, although the UE 143 is able to receive the first signal. The UE 143 can only continuously monitors the control channel.

The total power consumption required by the UE 142 to perform control channel detection is significantly lower than the total power consumption required by the UE 143 to perform control channel detection. The UE 142 achieves a saving of power consumption by the first signal.

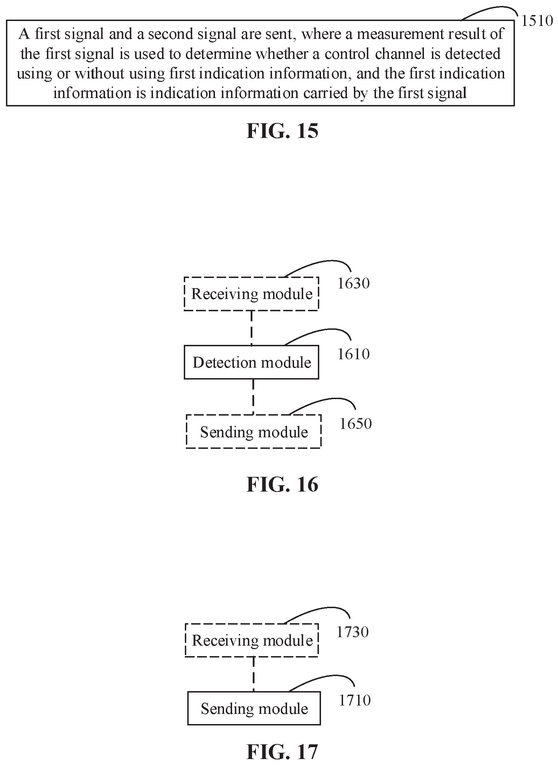

FIG. 15 illustrates a schematic flowchart of a channel detection method provided by an exemplary embodiment of the disclosure, and the method is performed by the network device shown in FIG. 3 or FIG. 4 or by the terminal device as shown in FIG. 1, and the method includes the following operation.

In an operation 1510, a first signal and a second signal are sent, where a measurement result of the first signal is used to determine whether a control channel is detected using or without using first indication information, and the first indication information is indication information carried by the first signal.

In the disclosure, the control channel includes, for example, one or more of a PDCCH and a PSCCH.

In some embodiments, the ,operation 1510 may be implemented as: a first signal is sent, where the measurement result of the first signal is used to determine whether the control channel is detected using or without using the first indication information, and the first indication information is indication information carried by the first signal; and a control channel is sent based on a waveform of the second signal, where a waveform of the first signal is different from the waveform of the second signal.

The first indication information is related to detection of the control channel, which may also be understood as that the first indication information is related to a control channel required to be detected.

The detection of the control channel using the first indication information means that the detection of the control channel is performed according to the indication information carried by the first signal.

The detection of the control channel without using the first indication information means that the detection of the control channel is performed not according to the indication information carried by the first signal.

In some embodiments, the first indication information instructs the terminal device to detect the control channel, or instructs the terminal device not to detect the control channel.

In some embodiments, the waveform of the first signal is different from the waveform of the second signal.

In some embodiments, when the measurement result of the first signal satisfies the first condition, the terminal device is supported to detect the control channel using the first indication information. For related contents, reference can be made to the operation 610.

In some embodiments, when the measurement result of the first signal satisfies the first condition, the terminal device is supported to enable the multi-stage control detection. For related contents, reference can be made to the operations 710, 730, 1110, 1130, and 1150.

In some embodiments, when the measurement result of the first signal satisfies the second condition, the terminal device is supported to detect the control channel without using the first indication information. For related contents, reference can be made to the operations 810, 910, 1210 and 1230.

In summary, the method provided by the embodiment of the disclosure supports adjusting the detection of the control channel by the measurement result of the first signal. If the control channel is detected using the first indication information, meaningless channel detection can be avoided, the efficiency of channel detection can be improved, and power consumption can be saved. If the first indication information indicates that the terminal device does not need to detect the control channel, the number of times of detecting the control channel is reduced, and the effect of saving power consumption is significant.

Further, the first signal waveform provided by the embodiment of the disclosure is simple, and the power consumption required by the terminal device to monitor, receive, measure, and detect the first signal is extremely low. Therefore, whether compared with monitoring the control channel or compared with monitoring the power-saving signal, the power consumption required for channel detection by monitoring the first signal is significantly less than the power consumption required for monitoring the control channel in the traditional scheme, and also significantly less than the power consumption required for monitoring and detecting the power-saving signal.

Moreover, multi-stage control detection not only reduces the overall power consumption of the channel detection process, but also improves the efficiency of channel detection and avoids meaningless channel detection behavior(s). When the multi-stage control detection is combined with the first DRX cycle, the terminal device is supported to detect the control channel during the active time of the DRX cycle, and not detect the control channel during the inactive time, thereby further reducing power consumption on the basis of enabling the multi-stage control detection.

Compared with the conventional design in which the same detection scheme is adopted regardless of whether the communication quality is good or bad, the method provided by the embodiment of the disclosure has better flexibility, and since the channel detection scheme is associated with the measurement result of the first signal, the channel detection scheme actually adopted by the terminal device is matched with the current communication quality in the system, which helps to improve the efficiency and reliability of channel detection.

In the embodiments shown in FIG. 5 to FIG. 15, any one of the following modulation schemes can be adopted for the first signal: OOK modulation, MC-OOK modulation, FSK modulation, PSK modulation, BPSK modulation, and ASK modulation. Combined with binary sequences, several modulation schemes are briefly introduced therein.

Taking the modulation scheme including OOK modulation as an example, sequence elements whose values are "1" and "0" in a binary sequence correspond to a high level and a low level in an OOK sequence, respectively. For example, a sequence element whose value is "1" in the binary sequence corresponds to a high level in the OOK sequence, and a sequence element whose value is "0" in the binary sequence corresponds to a low level in the OOK sequence; or, the sequence element whose value is "1" in the binary sequence corresponds to the low level in the OOK sequence, and the sequence element whose value is "0" in the binary sequence corresponds to the high level in the OOK sequence. In a case where the binary sequence consists of "+1" and "-1", the principle of OOK modulation is similar, and the description thereof will not be repeated.

Taking the modulation scheme including PSK modulation as an example, sequence elements whose values are "1" and "0" in the binary sequence correspond to phase continuity (+1) and phase jump (0 or -1) in a PSK sequence, respectively. For example, a sequence element whose value is "1" in the binary sequence corresponds to the phase continuity (+1) in the PSK sequence, and a sequence element whose value is "0" in the binary sequence corresponds to the phase jump (0 or -1) in the PSK sequence; or, the sequence element whose value is "1" in the binary sequence corresponds to the phase jump (0 or -1) in the PSK sequence, and the sequence element whose value is "0" in the binary sequence corresponds to the phase continuity (+1) in the PSK sequence. In a case where the binary sequence consists of "+1" and "-1", the principle of PSK modulation is similar, and the description thereof will not be repeated.

Taking the modulation scheme including BPSK modulation as an example, sequence elements whose values are "1" and "0" in a binary sequence correspond to a positive level (÷1) and a negative level (-1) in an BPSK sequence, respectively. For example, a sequence element whose value is "1" in the binary sequence corresponds to the positive level (+1) in the BPSK sequence, and a sequence element whose value is "0" in the binary sequence corresponds to the negative level (-1) in the BPSK sequence; or, the sequence element whose value is "1" in the binary sequence corresponds to the negative level (-1) in the BPSK sequence, and the sequence element whose value is "0" in the binary sequence corresponds to the positive level (+1) in the BPSK sequence. In a case where the binary sequence consists of "+1" and "-1", the principle of BPSK modulation is similar, and the description thereof will not be repeated.

Taking the modulation scheme including FSK modulation as an example, sequence elements whose values are "1" and "0" in a binary sequence correspond to two carrier frequencies in an FSK sequence, respectively. For example, a sequence element whose value is "1" in the binary sequence corresponds to a carrier frequency 1 in the FSK sequence, and a sequence element whose value is "0" in the binary sequence corresponds to a carrier frequency 0 in the FSK sequence; or, the sequence element whose value is "1" in the binary sequence corresponds to the carrier frequency 0 in the FSK sequence, and the sequence element whose value is "0" in the binary sequence corresponds to the carrier frequency 1 in the FSK sequence. In a case where the binary sequence consists of "+1" and "-1", the principle of FSK modulation is similar, and the description thereof will not be repeated.

FIG. 16 illustrates a structural block diagram of a channel detection apparatus provided by an exemplary embodiment of the disclosure. The apparatus can be implemented as the terminal device shown in FIG. 1 or FIG. 2 or FIG. 3 or FIG. 4, or implemented as a part of the terminal device shown in FIG. 1 or FIG. 2 or FIG. 3 or FIG. 4, and the apparatus includes a detection module 1610. Optionally, the apparatus further includes at least part of a receiving module 1630 and a sending module 1650.

The detection module 1610 is configured to detect a first signal and/or a second signal 1610, the first signal and the second signal having different waveforms.

The detection module 1610 is further configured to detect a control channel using or without using first indication information based on a measurement result of the first signal, the first indication information being indication information carried by the first signal.

In some embodiments, the detection module 1610 is further configured to, when the measurement result of the first signal satisfies a first condition, detect the control channel using the first indication information.

In some embodiments, the apparatus further includes a receiving module 1630 configured to receive the first signal and/or the second signal.

In some embodiments, the receiving module 1630 is further configured to acquire the measurement result of the first signal.

In some embodiments, the detection module 1610 is further configured to perform first-stage control detection on the first signal to obtain the first indication information.

In some embodiments, the detection module 1610 is further configured to perform second-stage control detection on the control channel using the first indication information.

In some embodiments, the detection module 1610 is further configured to, when the first indication information includes a first identification, and/or the first indication information is used to indicate detection of a control channel associated with the first identification, perform the second-stage control detection on the control channel associated with the first identification.

In some embodiments, the detection module 1610 is further configured to initiate a first DRX cycle associated with the first indication information, and perform the second-stage control detection on the control channel during active time of the first DRX cycle.

In some embodiments, the detection module 1610 is further configured to:
when the first indication information includes a first identifier and/or the first indication information is used to indicate detection of a control channel associated with the first identifier, initiate the first DRX cycle; and
perform the second-stage control detection on the control channel associated with the first identifier during the active time of the first DRX cycle.

In some embodiments, the first identifier includes at least one of: a network identifier; an access identifier of the terminal device; an access group identifier of the terminal device; a physical identifier of the terminal device; or a hardware identifier of the terminal device.

In some embodiments, the network identifier is associated with a first cell identifier, and/or the network identifier is associated with a first beam identifier, where the first cell identifier is a cell identifier corresponding to the second signal, and the first beam identifier is a beam identifier corresponding to the second signal.

In some embodiments, the first condition includes that a signal quality of the first signal is greater than a first threshold.

In some embodiments, the detection module 1610 is further configured to enable multi-stage control detection when the measurement result of the first signal satisfies the first condition, where the multi-stage control detection includes a first-stage control detection and a second-stage control detection.

In some embodiments, the detection module 1610 is further configured to, when the measurement result of the first signal satisfies a second condition, detect the control channel without using the first indication information.

In some embodiments, the detection module 1610 is further configured to detect the control channel using a default manner, the default manner being agreed by a communication protocol or indicated by a network device.

In some embodiments, the detection module 1610 is further configured to: initiate a second DRX cycle, the second DRX cycle being a default DRX cycle; and detect the control channel during active time of the second DRX cycle.

In some embodiments, the second condition includes at least one of: a signal quality of the first signal is less than a second threshold; acquisition of the measurement result of the first signal is unsuccessful; or acquisition of the first indication information is unsuccessful.

In some embodiments, the second threshold is a difference between the measurement result of the first signal and a measurement result of the second signal.

In some embodiments, the detection module 1610 is further configured to disable multi-stage control detection when the measurement result of the first signal satisfies the second condition, where the multi-stage control detection includes a first-stage control detection and a second-stage control detection.

In some embodiments, the signal quality of the first signal is represented by at least one of: RSRP value; RSSI value; RSRQ value; SINR value; CLI value; or CSI value.

In some embodiments, the first signal is generated using a binary sequence, where the binary sequence includes at least one of: Pseudo-Noise (PN) sequence; gold sequence; m sequence; or Hadamard sequence.

In some embodiments, the type of the second signal includes at least one of: SSB; CSI-RS; TRS; or PT-RS.

In some embodiments, the apparatus further includes a sending module 1650 configured to send signal(s) and/or data based on a detection result of the control channel.

In some embodiments, the detection module 1610 is configured to perform one or more of the following operations: operation 510, Operation 610, Operation 710, Operation 730, Operation 1110, Operation 1130, Operation 1150, Operation 810, Operation 910, Operation 1210, or Operation 1230.

In summary, the apparatus provided in the embodiments of the disclosure supports adjusting the detection of the control channel by the measurement result of the first signal. If the control channel is detected using the first indication information, meaningless channel detection can be avoided, the efficiency of channel detection can be improved, and power consumption can be saved. If the first indication information indicates that the control channel is not needed to be detected, the number of times of detecting the control channel is reduced, and the effect of saving power consumption is significant.

Moreover, the waveform of the first signal is simple, and the power consumption required for monitoring, receiving, measuring and detecting the first signal is extremely low. Therefore, whether compared with monitoring the control channel or compared with monitoring the power-saving signal, the power consumption required for channel detection by monitoring the first signal is significantly less than the power consumption required for monitoring the control channel in the traditional scheme, and also significantly less than the power consumption required for monitoring and detecting the power-saving signal.

Further, compared with monitoring and receiving a signal by a conventional receiver, when the first signal is monitored and received by a secondary receiver having the characteristics of low power consumption and low complexity, the overall power consumption of the channel detection process can be further reduced.

Compared with the traditional design of adopting the same detection scheme regardless of whether the communication quality is good or bad, the apparatus has better flexibility, and since the channel detection scheme is associated with the measurement result of the first signal, the actually adopted channel detection scheme is matched with the current communication quality in the system, which helps to improve the efficiency and reliability of channel detection.

FIG. 17 illustrates a structural block diagram of a channel detection apparatus provided by an exemplary embodiment of the disclosure. The apparatus can be implemented as the network device shown in FIG. 3 or FIG. 4, or implemented as a part of the network device shown in FIG. 3 or FIG. 4, and the apparatus includes a sending module 1710. Optionally, the apparatus further includes a receiving module 1730.

The sending module 1710 is configured to send a first signal and a second signal 1710, a measurement result of the first signal being used to determine whether a control channel is detected using or without using first indication information, where the first indication information is indication information carried by the first signal, and the first signal and the second signal have different waveforms.

In some embodiments, when the measurement result of the first signal satisfies a first condition, the measurement result of the first signal is used to detect the control channel using the first indication information.

In some embodiments, detecting the control channel using the first indication information includes: enabling multi-stage control detection, where the multi-stage control detection includes first-stage control detection of the first signal and second-stage control detection of the control channel.

In some embodiments, detecting the control channel using the first indication information includes: enabling multi-stage control detection and initiating a first DRX cycle, where the multi-stage control detection includes first-stage control detection of the first signal, and second-stage control detection of the control channel during active time of the first DRX cycle.

In some embodiments, the first indication information includes a first identifier, and/or the first indication information is used to indicate detection of a control channel associated with the first identifier.

In some embodiments, the first identifier includes at least one of: a network identifier; an access identifier of the terminal device; an access group identifier of the terminal device; a physical identifier of the terminal device; or a hardware identifier of the terminal device.

In some embodiments, the network identifier is associated with a first cell identifier, and/or the network identifier is associated with a first beam identifier, where the first cell identifier is a cell identifier corresponding to the second signal, and the first beam identifier is a beam identifier corresponding to the second signal.

In some embodiments, the first condition includes that a signal quality of the first signal is greater than a first threshold.

In some embodiments, when the measurement result of the first signal satisfies a second condition, the measurement result of the first signal is used to detect the control channel without using the first indication information.

In some embodiments, detecting the control channel without using the first indication information includes: detecting the control channel using a default manner, the default manner being agreed by a communication protocol or indicated by the apparatus.

In some embodiments, detecting the control channel without using the first indication information includes: initiating a second DRX cycle, the second DRX cycle being a default DRX cycle; and detecting the control channel during active time of the second DRX cycle.

In some embodiments, the second condition includes at least one of: a signal quality of the first signal is less than a second threshold; acquisition of the measurement result of the first signal is unsuccessful; or acquisition of the first indication information is unsuccessful.

In some embodiments, the second threshold is a difference between the measurement result of the first signal and a measurement result of the second signal.

In some embodiments, detecting the control channel without using the first indication information includes: disabling multi-stage control detection, where the multi-stage control detection includes first-stage control detection and second-stage control detection.

In some embodiments, the signal quality of the first signal is represented by at least one of: RSRP value; RSSI value; RSRQ value; SINR value; CLI value; or CSI value.

In some embodiments, the first signal is generated using a binary sequence, where the binary sequence includes at least one of: Pseudo-Noise (PN) sequence; gold sequence; m sequence; or Hadamard sequence.

In some embodiments, the type of the second signal includes at least one of: SSB; CSI-RS; TRS; or PT-RS.

In some embodiments, the apparatus further includes a receiving module 1730 configured to receive signal(s) and/or data from the terminal device.

In some embodiments, the sending module 1710 is configured to perform operation 1510.

In summary, the apparatus provided in the embodiments of the disclosure supports adjusting the detection of the control channel by the measurement result of the first signal. If the control channel is detected using the first indication information, meaningless channel detection can be avoided, the efficiency of channel detection can be improved, and power consumption can be saved. If the first indication information indicates that the terminal device does not need to detect the control channel, the number of times of detecting the control channel is reduced, and the effect of saving power consumption is significant.

Further, the first signal waveform provided by the embodiment of the disclosure is simple, and the power consumption required by the terminal device to monitor, receive, measure, and detect the first signal is extremely low. Therefore, whether compared with monitoring the control channel or compared with monitoring the power-saving signal, the power consumption required for channel detection by monitoring the first signal is significantly less than the power consumption required for monitoring the control channel in the traditional scheme, and also significantly less than the power consumption required for monitoring and detecting the power-saving signal.

Moreover, multi-stage control detection not only reduces the overall power consumption of the channel detection process, but also improves the efficiency of channel detection and avoids meaningless channel detection behavior(s). When the multi-stage control detection is combined with the first DRX cycle, the terminal device is supported to detect the control channel during the active time of the DRX cycle, and not detect the control channel during the inactive time, thereby further reducing power consumption on the basis of enabling the multi-stage control detection.

Compared with the conventional design in which the same detection scheme is adopted regardless of whether the communication quality is good or bad, the method provided by the embodiment of the disclosure has better flexibility, and since the channel detection scheme is associated with the measurement result of the first signal, the channel detection scheme actually adopted by the terminal device is matched with the current communication quality in the system, which helps to improve the efficiency and reliability of channel detection.

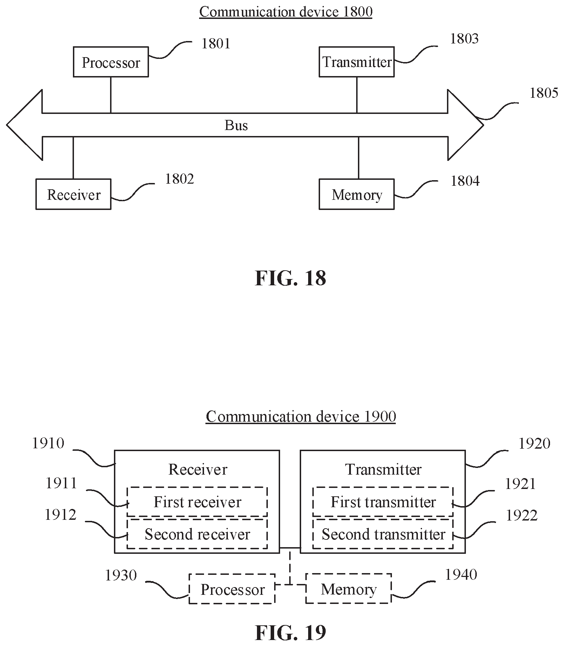

FIG. 18 shows a schematic structural diagram of a communication device 1800, including a processor 1801, a receiver 1802, a transmitter 1803, a memory 1804 and a bus 1805, provided by an exemplary embodiment of the disclosure. The communication device 1800 may be used to perform some or all of the operations performed by the terminal device shown in FIG. 5 to FIG. 14, and the communication device 1800 may also be used to perform some or all of the operations performed by the network device shown in FIG. 15.

The processor 1801 includes one or more processing cores, and executes various functional applications and information processing by running software programs and modules. In some embodiments, the processor 1801 may be used to implement the functions and operations of the detection module 1610 described above.

The receiver 1802 and the transmitter 1803 may be implemented as a communication component, which may be a communication chip that may be referred to as a transceiver. In some embodiments, the receiver 1802 may be used to implement the functions and operations of the receiving module 1630 and/or the receiving module 1730 and/or the detection module 1610 described above, and the transmitter 1803 may be used to implement the functions and operations of the sending module 1650 and/or the sending module 1710 described above.

The memory 1804 is connected to the processor 1801 via the bus 1805.

The memory 1804 may be configured to store at least one instruction to be executed by the processor 1801 to implement the various operations in the method embodiments.

Further, the memory 1804 may be implemented by any type of volatile or non-volatile storage device or a combination thereof, which includes, but not limited to, magnetic or optical disk, Electrically Erasable Programmable Read-Only Memory (EEPROM), Erasable Programmable Read-Only Memory (EPROM), Static Random-Access Memory (SRAM), Read-Only Memory (ROM), magnetic memory, flash memory, Programmable Read-Only Memory (PROM).

In some embodiments, the receiver 1802 receives the signal/data independently, or the processor 1801 controls the receiver 1802 to receive the signal/data, or the processor 1801 requests the receiver 1802 to receive the signal/data, or the processor 1801 cooperates with the receiver 1802 to receive the signal/data.

In some embodiments, the transmitter 1803 transmits the signal/data independently, or the processor 1801 controls the transmitter 1803 to transmit the signal/data, or the processor 1801 requests the transmitter 1803 to transmit the signal/data, or the processor 1801 cooperates with the transmitter 1803 to transmit the signal/data.

FIG. 19 shows a schematic structural diagram of a communication device 1900 including a receiver 1910 and a transmitter 1920 provided by an exemplary embodiment of the disclosure. The communication device 1900 may be used to perform some or all of the operations performed by the terminal devices shown in FIG. 5 to FIG. 14.

The receiver 1910 and the transmitter 1920 may be implemented as a communication component, which may be a communication chip that may be referred to as a transceiver.

In some embodiments, the receiver 1910 may be used to implement the functions and operations of the receiving module 1630 and/or the detection module 1610 as described above. Optionally, the receiver 1910 may be implemented as a first receiver 1911 and a second receiver 1912.

In some embodiments, the transmitter 1920 may be used to implement the functions and operations of the sending module 1650 described above. Alternatively, the transmitter 1920 may be implemented as a first transmitter 1921 and a second transmitter 1922.

Optionally, the communication device 1900 may further include a processor 1930. The processor 1930 includes one or more processing cores, and executes various functional applications and information processing by running software programs and modules.

Optionally, the communication device 1900 may further include a memory 1940. The memory 1940 may be configured to store at least one instruction to be executed by the processor 1910 to implement the various operations in the method embodiments. Further, the memory 1904 may be implemented by any type of volatile or non-volatile storage device or a combination thereof, where the volatile or non-volatile storage device includes, but is not limited to, magnetic or optical disk, EEPROM, EPROM, SRAM, ROM, magnetic memory, flash memory, PROM.

Optionally, the communication device 1900 may also include a bus (not shown). Optionally, the memory 1940 is connected to the processor 1930 via the bus.

In some embodiments, the receiver 1910 receives the signal/data independently, or the processor 1930 controls the receiver 1910 to receive the signal/data, or the processor 1930 requests the receiver 1910 to receive the signal/data, or the processor 1930 cooperates with the receiver 1910 to receive the signal/data.

In some embodiments, the transmitter 1920 transmits the signal/data independently, or the processor 1930 controls the transmitter 1920 to transmit the signal/data, or the processor 1930 requests the transmitter 1920 to transmit the signal/data, or the processor 1930 cooperates with the transmitter 1920 to transmit the signal/data.

In some embodiments, the first receiver 1911 is implemented as a WUR (which may also be referred to as a secondary receiver, or a low-power receiver), and/or the second receiver 1912 is implemented as a primary receiver.

In some embodiments, the receiver 1910 is implemented as a combined receiver of the WUR and the primary receiver.

In some embodiments, the first transmitter 1921 is implemented as a primary transmitter, and/or the second transmitter 1922 is implemented as a backscatter transmitter.

In some embodiments, the transmitter 1920 is implemented as a combined transmitter of the primary transmitter and the backscatter transmitter.

In some embodiments, the processor 1930 and the receiver 1910 may be implemented as one module, or the processor 1930 may be implemented as part of the receiver 1910.

In some embodiments, the processor 1930 and the transmitter 1920 may be implemented as one module, or the processor 1930 may be implemented as part of the transmitter 1920.

In some embodiments, the communication device 1900 includes one or more processors 1930, and different processors are used to perform the same operation or different operations of the above-described processing-related operations.

In an exemplary embodiment of the disclosure, there is further provided a computer-readable storage medium having stored thereon at least section of programs loaded and executed by a processor to perform the channel detection method according to various method embodiments above.

In an exemplary embodiment of the disclosure, there is further provided a chip including a programmable logic circuit or a program, the chip, when running one a communication device, being configured to perform the channel detection method according to various method embodiments above.

In an exemplary embodiment of the disclosure, there is further provided a computer program product running on a processor of a computer device to cause the computer device to perform the channel detection method according to various method embodiments above.

In an exemplary embodiment of the disclosure, there is further provided a computer program, including computer instructions executed by a processor of a computer device to cause the computer device to perform the channel detection method according to various method embodiments above.

One of ordinary skill in the art will understand that all or part of the operations for implementing the above-described embodiments may be done by hardware, or may be done by instructing relevant hardware via a program, the program may be stored in a computer-readable storage medium, and the storage medium may be a read-only memory, a magnetic disk, an optical disk or the like.

The above describes only optional embodiments of the disclosure, and is not intended to limit the disclosure. Any modification, equivalent substitution, improvement and the like made within the spirit and principles of the disclosure should be included within the scope of protection of the disclosure.

## Claims

1. A channel detection method, performed by a terminal device that detects a first signal and/or a second signal, the first signal and the second signal having different waveforms, the method comprising:
detecting a control channel using or without using first indication information based on a measurement result of the first signal,
wherein the first indication information is indication information carried by the first signal.

2. The method of claim 1, wherein detecting the control channel using the first indication information based on the measurement result of the first signal comprises:
when the measurement result of the first signal satisfies a first condition, detecting the control channel using the first indication information.

3. The method of claim 2, further comprising: before detecting the control channel using the first indication information, performing first-stage control detection on the first signal to obtain the first indication information.

4. The method of claim 2 or 3, wherein detecting the control channel using the first indication information comprises performing second-stage control detection on the control channel using the first indication information.

5. The method of claim 4, wherein performing the second-stage control detection on the control channel using the first indication information comprises:
when the first indication information comprises a first identifier and/or the first indication information is used to indicate detection of a control channel associated with the first identifier, performing second-stage control detection on the control channel associated with the first identifier.

6. The method of claim 2 or 3, wherein detecting the control channel using the first indication information comprises:
initiating a first Discontinuous Reception (DRX) cycle associated with the first indication information; and
performing second-stage control detection on the control channel during active time of the first DRX cycle.

7. The method of claim 6, wherein
initiating the first DRX cycle comprises:
when the first indication information comprises a first identifier and/or the first indication information is used to indicate detection of a control channel associated with the first identifier, initiating the first DRX cycle; and
performing the second-stage control detection on the control channel during the active time of the first DRX cycle comprises:
performing the second-stage control detection on the control channel associated with the first identifier during the active time of the first DRX cycle.

8. The method of claim 5 or 7, wherein the first identifier comprises at least one of: a network identifier; an access identifier of the terminal device; an access group identifier of the terminal device; a physical identifier of the terminal device; or a hardware identifier of the terminal device.

9. The method of claim 8, wherein the network identifier is associated with a first cell identifier, and/or the network identifier is associated with a first beam identifier,
wherein the first cell identifier is a cell identifier corresponding to the second signal, and the first beam identifier is a beam identifier corresponding to the second signal.

10. The method of any one of claims 2 to 9, wherein the first condition comprises that a signal quality of the first signal is greater than a first threshold.

11. The method of any one of claims 2 to 10, further comprising:
enabling multi-stage control detection when the measurement result of the first signal satisfies the first condition,
wherein the multi-stage control detection comprises a first-stage control detection and a second-stage control detection.

12. The method of claim 1, wherein detecting the control channel without using the first indication information based on the measurement result of the first signal comprises:
when the measurement result of the first signal satisfies a second condition, detecting the control channel without using the first indication information.

13. The method of claim 12, wherein the control channel is detected without using the first indication information, the method further comprises: detecting the control channel using a default manner, the default manner being agreed by a communication protocol or indicated by a network device.

14. The method of claim 13, wherein detecting the control channel using the default manner comprises:
initiating a second DRX cycle, the second DRX cycle being a default DRX cycle; and
detecting the control channel during active time of the second DRX cycle.

15. The method of any one of claims 12 to 14, wherein the second condition comprises at least one of: a signal quality of the first signal is less than a second threshold; acquisition of the measurement result of the first signal is unsuccessful; or acquisition of the first indication information is unsuccessful.

16. The method of claim 15, wherein the second threshold is a difference between the measurement result of the first signal and a measurement result of the second signal.

17. The method of any one of claims 12 to 16, further comprising:
when the measurement result of the first signal satisfies the second condition, disabling multi-stage control detection,
wherein the multi-stage control detection comprises a first-stage control detection and a second-stage control detection.

18. The method of claim 10 or 15, wherein the signal quality of the first signal is represented by at least one of: Reference Signal Receiving Power (RSRP) value; Reference Signal Strength Indicator (RSSI) value; Reference Signal Receiving Quality (RSRQ) value; Signal to Interference plus Noise Ratio (SINR) value; Cross Link Interference (CLI) value; or Channel State Information (CSI) value.

19. The method of any one of claims 1 to 18, wherein the first signal is generated using a binary sequence,
wherein the binary sequence comprises at least one of: Pseudo-Noise (PN) sequence; gold sequence; m sequence; or Hadamard sequence.

20. The method of any one of claims 1 to 19, wherein a type of the second signal comprises at least one of:
Synchronization Signal Block (SSB); Channel State Information Reference Signal (CSI-RS); Tracking Reference Signal (TRS); or Phase Tracking Reference Signal (PT-RS).

21. A channel detection method performed by a network device, comprising:
sending a first signal and a second signal, a measurement result of the first signal being used to determine whether a control channel is detected using or without using first indication information,
wherein the first indication information is indication information carried by the first signal, and the first signal and the second signal have different waveforms.

22. The method of claim 21, wherein when the measurement result of the first signal satisfies a first condition, the measurement result of the first signal is used to detect the control channel using the first indication information.

23. The method of claim 22, wherein detecting the control channel using the first indication information comprises: enabling multi-stage control detection,
wherein the multi-stage control detection comprises first-stage control detection of the first signal and second-stage control detection of the control channel.

24. The method of claim 22, wherein detecting the control channel using the first indication information comprises: enabling multi-stage control detection, and initiating a first Discontinuous Reception (DRX) cycle,
wherein the multi-stage control detection comprises first-stage control detection of the first signal, and second-stage control detection of the control channel during active time of the first DRX cycle.

25. The method of claim 23 or 24, wherein the first indication information comprises a first identifier, and/or the first indication information is used to indicate detection of a control channel associated with the first identifier.

26. The method of claim 25, wherein the first identifier comprises at least one of: a network identifier; an access identifier of the terminal device; an access group identifier of the terminal device; a physical identifier of the terminal device; or a hardware identifier of the terminal device.

27. The method of claim 26, wherein the network identifier is associated with a first cell identifier, and/or the network identifier is associated with a first beam identifier,
wherein the first cell identifier is a cell identifier corresponding to the second signal, and the first beam identifier is a beam identifier corresponding to the second signal.

28. The method of any one of claims 22 to 27, wherein the first condition comprises that a signal quality of the first signal is greater than a first threshold.

29. The method of claim 21, wherein when the measurement result of the first signal satisfies a second condition, the measurement result of the first signal is used to detect the control channel without using the first indication information.

30. The method of claim 29, wherein detecting the control channel without using the first indication information comprises: detecting the control channel using a default manner, the default manner being agreed by a communication protocol or indicated by the network device.

31. The method of claim 29 or 30, wherein detecting the control channel without using the first indication information comprises:
initiating a second DRX cycle, the second DRX cycle being a default DRX cycle; and
detecting the control channel during active time of the second DRX cycle.

32. The method of any one of claims 29 to 31, wherein the second condition comprises at least one of: a signal quality of the first signal is less than a second threshold; acquisition of the measurement result of the first signal is unsuccessful; or acquisition of the first indication information is unsuccessful.

33. The method of claim 32, wherein the second threshold is a difference between the measurement result of the first signal and a measurement result of the second signal.

34. The method of any one of claims 29 to 33, wherein detecting the control channel without using the first indication information comprises: disabling multi-stage control detection, wherein the multi-stage control detection comprises first-stage control detection and second-stage control detection.

35. The method of claim 28 or 32, wherein the signal quality of the first signal is represented by at least one of: Reference Signal Receiving Power (RSRP) value; Reference Signal Strength Indicator (RSSI) value; Reference Signal Receiving Quality (RSRQ) value; Signal to Interference plus Noise Ratio (SINR) value; Cross Link Interference (CLI) value; or Channel State Information (CSI) value.

36. The method of any one of claims 21 to 35, wherein the first signal is generated using a binary sequence,
wherein the binary sequence comprises at least one of: Pseudo-Noise (PN) sequence; gold sequence; m sequence; or Hadamard sequence.

37. The method of any one of claims 21 to 36, wherein a type of the second signal comprises at least one of:
Synchronization Signal Block (SSB); Channel State Information Reference Signal (CSI-RS); Tracking Reference Signal (TRS); or Phase Tracking Reference Signal (PT-RS).

38. A channel detection apparatus, comprising:
a detection module configured to detect a first signal and/or a second signal, the first signal and the second signal having different waveforms,
wherein the detection module is further configured to detect a control channel using or without using first indication information based on a measurement result of the first signal,
wherein the first indication information is indication information carried by the first signal.

39. A channel detection apparatus, comprising:
a sending module configured to send a first signal and a second signal, a measurement result of the first signal being used to determine whether a control channel is detected using or without using first indication information,
wherein the first indication information is indication information carried by the first signal, and the first signal and the second signal have different waveforms.

40. A terminal device, comprising a receiver,
wherein the terminal device is configured to perform the channel detection method of any one of claims 1 to 20.

41. A network device, comprising: a processor, a transmitter connected with the processor, and a memory for storing instructions executable by the processor,
wherein the network device is configured to perform the channel detection method of any one of claims 21 to 37.

42. A computer-readable storage medium having stored thereon executable instructions loaded and executed by a processor to perform the channel detection method of any one of claims 1 to 20, or the channel detection method of any one of claims 21 to 37.

43. A chip, comprising a programmable logic circuit or a program, the chip being configured to perform the channel detection method of any one of claims 1 to 20, or the channel detection method of any one of claims 21 to 37.

44. A computer program product, comprising computer instructions stored in a computer-readable storage medium from which a processor of a computer device reads the computer instructions, wherein the processor executes the computer instructions to cause the computer device to perform the channel detection method of any one of claims 1 to 20, or the channel detection method of any one of claims 21 to 37.

45. A computer program, comprising computer instructions executed by a processor of a computer device to cause the computer device to perform the channel detection method of any one of claims 1 to 20, or the channel detection method of any one of claims 21 to 37.
